# EUROPEAN PATENT SPECIFICATION

(11) **EP 2 412 764 B1**
(45) Date of publication and mention of the grant of the patent: **15.10.2014**
(21) Application number: 11174452.0
(22) Date of filing: 19.07.2011
(51) Int. Cl.: C09D 11/00, C09D 11/10

(54) **Ink set for inkjet recording, inkjet recording method, and printed material**
Tintensatz zur Tintenstrahlaufzeichnung, Tintenstrahlaufzeichnungsverfahren und gedrucktes Material
Jeu d'encre pour enregistrement pour jet d'encre, procédé d'enregistrement à jet d'encre et matériau imprimé

(30) Priority: 27.07.2010 JP 2010168536
(43) Date of publication of application: 01.02.2012
(73) Proprietor: FUJIFILM Corporation, Tokyo (JP)
(72) Inventor: HAYATA, Yuuichi, Ashigarakami-gun, Kanagawa (JP)
(74) Representative: Morpeth, Fraser Forrest

(56) References cited:
- EP-A1- 1 967 557
- EP-A1- 2 159 272
- EP-A1- 2 433 807
- EP-A1- 2 457 963
- WO-A1-02/38687
- WO-A1-2009/048585
- WO-A1-2010/125373
- WO-A2-02/38688
- WO-A2-2008/045517
- US-A1- 2006 142 415
- US-A1- 2008 231 679

## Description

The present invention relates to an ink set for inkjet recording, an inkjet recording method, and a printed material.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays.

Examples of the conventional ink composition for inkjet recording are described in JP-A-2006-169420 (JP-A denotes a Japanese unexamined patent application publication), JP-A-2009-84419, JP-A-2009-102644 and International Patent Application WO 2006/027966. Similar inks are also disclosed in US 2006/142415, WO 2002/38688, WO 2010/125373, WO 2002/38687, WO 2008045517, US2008/231679, WO 2009/048585, EP 1967557 and EP2159272

It is an object of the present invention to provide an ink set for inkjet recording that can give a printed material having high image color saturation and reflection color density, inconspicuous stripe unevenness, and excellent surface gloss and flexibility, an inkjet recording method employing the ink set for inkjet recording, and a printed material.

The object of the present invention has been achieved by means described in <1>, and <13> to <15> below. They are described below together with <2> to <12>, which are preferred embodiments.
<1> An ink set for inkjet recording, comprising at least a cyan ink, a magenta ink, a yellow ink, and a black ink, the cyan ink comprising at least a phthalocyanine pigment, the magenta ink comprising at least C.I. Pigment Violet 19, C.I. Pigment Red 122, C.I. Pigment Red 202, or a mixed crystal pigment containing C.I. Pigment Violet 19, the yellow ink comprising at least C.I. Pigment Yellow 120, 150, 151, 155, 180, or 213, the black ink comprising at least carbon black, all of the cyan ink, the magenta ink, the yellow ink, and the black ink comprising (Component A) an *N*-vinyllactam and/or tetrahydrofurfuryl (meth)acrylate, (Component B) a compound represented by Formula (1) at 21 to 55 wt% relative to the total weight of the ink, and (Component C) a polymerization initiator, and Component E) phenoxyethyl (meth)acrylate, all of the cyan ink, the magenta ink, the yellow ink, and the black ink either not comprising a silicone-based surfactant or a fluorine-based surfactant or comprising a silicone-based surfactant and a fluorine-based surfactant at a total content of greater than 0 wt% but less than 0.1 wt% relative to the total weight of the ink, and all of the cyan ink, the magenta ink, the yellow ink, and the black ink having a surface tension at 25°C of 29.0 to 33.4 mN/m, 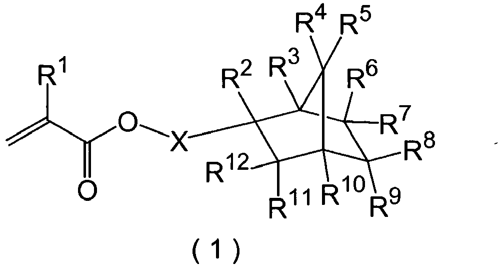 wherein in the Formula, R¹ denotes a hydrogen atom or a methyl group, X denotes a single bond or a divalent linking group, and R² to R¹² independently denote a hydrogen atom or an alkyl group,
<2> the ink set for inkjet recording according to <1> above, wherein Component A has a content of 5 to 35 wt% relative to the total weight of the ink,
<3> the ink set for inkjet recording according to <1> or <2> above, wherein Component B is isobornyl (meth)acrylate,
<4> the ink set for inkjet recording according to any one of <1> to <3> above, wherein all of the cyan ink, the magenta ink, the yellow ink, and the black ink comprise a (meth)acrylate compound containing a chain-form hydrocarbon group having 8 to 13 carbons,
<5> the ink set for inkjet recording according to any one of <1> to <4> above, wherein all of the cyan ink, the magenta ink, the yellow ink, and the black ink comprise, as Component C, an α-hydroxyketone compound and an acylphosphine compound,
<6> the ink set for inkjet recording according to any one of <1> to <5> above, wherein all of the cyan ink, the magenta ink, the yellow ink, and the black ink comprise a thioxanthone,
<7> the ink set for inkjet recording according to any one of <1> to <6> above, wherein all of the cyan ink, the magenta ink, the yellow ink, and the black ink comprise a polyfunctional polymerizable compound at a content of 1 to 20 wt% relative to the total weight of the ink,
<8> the ink set for inkjet recording according to any one of <1> to <7> above, wherein the magenta ink comprises at least a mixed crystal pigment containing C.I. Pigment Violet 19,
<9> the ink set for inkjet recording according to any one of <1> to <8> above, wherein the yellow ink comprises C.I. Pigment Yellow 150, 155, or 180,
<10> the ink set for inkjet recording according to <9> above, wherein the yellow ink comprises C.I. Pigment Yellow 155 or 180,
<11> the ink set for inkjet recording according to any one of <1> to <10>, wherein the content of Component E in the inks of each color is 1 to 30 wt% relative to the total weight of the ink,
<12> The ink set for inkjet recording according to any one of <1> to < 11> wherein the inks of each color are solvent-free,
<13> an inkjet recording method comprising (a¹) a step of discharging onto a recording medium at least each of the cyan ink, the magenta ink, the yellow ink and the black ink of the ink set for inkjet recording according to any one of <1> to <10> above and (b¹) a step of curing the ink by irradiating the discharged ink with actinic radiation,
<14> the inkjet recording method according to <13>, wherein the inkjet recording method comprises carrying out drawing with multiple, that is, 2 to 16 passes for the same area, and
<15> a printed material formed using the inkjet recording method according to <13> or <14> above.

In accordance with the present invention, there can be provided an ink set for inkjet recording that can give a printed material having high image color saturation and reflection color density, inconspicuous stripe unevenness, and excellent surface gloss and flexibility, an inkjet recording method employing the ink set for inkjet recording, and a printed material.

The present invention is explained in detail below.

### Ink set for inkjet recording

The ink set for inkjet recording of the present invention (hereinafter, also called the 'ink set') is an ink set for inkjet recording comprising at least a cyan ink, a magenta ink, a yellow ink, and a black ink, the cyan ink comprising at least a phthalocyanine pigment, the magenta ink comprising at least C.I. Pigment Violet 19, C.I. Pigment Red 122, C.I. Pigment Red 202, or a mixed crystal pigment containing C.I. Pigment Violet 19, the yellow ink comprising at least C.I. Pigment Yellow 120, 150, 151, 155, 180, or 213, the black ink comprising at least carbon black, all of the cyan ink, the magenta ink, the yellow ink, and the black ink comprising (Component A) an N-vinyllactam and/or tetrahydrofurfuryl (meth)acrylate, (Component B) a compound represented by Formula (1) at 21 to 55 wt% relative to the total weight of the ink, and (Component C) a polymerization initiator, all of the cyan ink, the magenta ink, the yellow ink, and the black ink either not comprising a silicone-based surfactant or a fluorine-based surfactant or comprising a silicone-based surfactant and a fluorine-based surfactant at a total content of greater than 0 wt% but less than 0.1 wt% relative to the total weight of the ink, and all of the cyan ink, the magenta ink, the yellow ink, and the black ink having a surface tension at 25°C of 29.0 to 33.4 mN/m.

The ink set of the present invention can give a printed material having high image color saturation and reflection color density, inconspicuous stripe unevenness, and excellent surface gloss and flexibility. 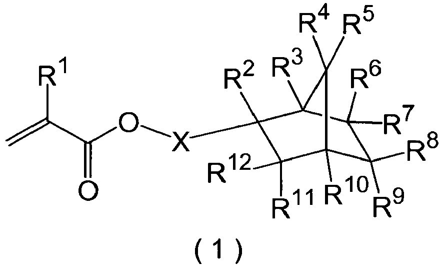 (In the Formula, R¹ denotes a hydrogen atom or a methyl group, X denotes a single bond or a divalent linking group, and R² to R¹² independently denote a hydrogen atom or an alkyl group.)

In the present specification, 'A to B', which expresses a numerical range, has the same meaning as 'at least A but no greater than B'. Furthermore, '(Component A) an *N*-vinyllactam or tetrahydrofurfuryl acrylate' etc. is also called 'Component A' etc. as appropriate. Moreover, the term '(meth)acrylate' is occasionally used to mean both or either of 'acrylate' and 'methacrylate', and the term '(meth)acryl' is occasionally used to mean both or either of 'acryl' and 'methacryl'.

The cyan ink, the magenta ink, the yellow ink and the black ink comprising the ink set of the present invention are an oil-based ink composition that is curable upon exposure to actinic radiation. The 'actinic radiation' referred to in the present invention is radiation that can provide energy that enables an initiating species to be generated in the ink when irradiated, includes α rays, γ rays, X rays, ultraviolet rays, visible light, and an electron beam. Among these, ultraviolet rays and an electron beam are preferable from the viewpoint of curing sensitivity and the availability of equipment, and ultraviolet rays are more preferable.

It is said that, compared with a printed material obtained by aqueous inkjet printing or solvent inkjet printing, in the case of a printed material obtained by actinic radiation-curing type inkjet printing a cured film has low surface gloss and marked stripe unevenness. It is thought that one of main causes therefore is the shape of a fired droplet when landing being retained since the fired droplet is cured by actinic radiation immediately after landing of the inkjet.

On the other hand, the ink used the present invention gives an inkjet image that has high color saturation, high image reflection density, excellent printed material surface gloss, and little stripe unevenness. Although the reason therefor is not certain, discharged ink comprising Component A and Component B as monomer components cures from an inner part of a fired droplet by irradiation with actinic radiation immediately after landing.

It is surmised that due to Component B in particular being present, it being expected to have a high dissolved oxygen content, the outermost surface of a cured film is subjected to oxygen polymerization inhibition, the initial reaction rate is decreased, the outermost surface of the fired droplet is thereby kept in a liquid state for a long period of time, the fired droplet outermost surface spreads while wet, and coalescence is promoted. It is surmised that, as a result, a smoother level surface is formed and an image having a high degree of surface gloss and inconspicuous stripe unevenness is obtained. In particular, when printing in a multipass mode in which the same area is printed by overstriking, a fired droplet is sometimes overlayered on a previously fired liquid droplet during overstriking. In this process, if the outermost surface of the ink film of the previously fired droplet is in a liquid state, the degree of spreading while wet of the subsequently fired droplet increases, and higher surface gloss is obtained.

When controlling the cured state of a fired droplet, it is important to maintain only the very outermost surface of the fired droplet in a liquid state. If the interior of the fired droplet is kept in a liquid state for a long period of time, a final printed material might become tacky, or a subsequently fired droplet might enter the film interior when overstriking, thus forming a crater-like recess in a printed material. As a result, the smoothness of a printed material surface might be undesirably lost. Furthermore, it is thought that low curability of the interior might cause interference between fired droplets (the position of fired droplets being displaced due to overlapping of the fired droplets), thus accentuating stripe unevenness. It is surmised that high curability of the interior might be maintained by the presence of Component A.

It is though that, in accordance with the present invention, since the combination of Component A and Component B makes it possible to selectively maintain only the cured film outermost surface in a liquid state for a long period of time while strongly promoting the curability of the interior of a fired droplet, a printed material having high surface gloss and little stripe unevenness is obtained.

In addition, for exhibition of gloss for secondary colors (R, G, B, 4 color black, etc.), which have high image density, pigment selection is particularly important. When a pigment has low transparency and easily causes light scattering, light cannot reach the base of the film, incomplete curing is caused in the base of the film, and as a result creases occur, thus greatly degrading the gloss of the image.

In the present invention, it has been found that in accordance with an ink set in which specific types of pigments are combined, that is, an ink set employing a phthalocyanine pigment as a cyan pigment, C.I. Pigment Violet 19, C.I. Pigment Red 122 or 202, or a mixed crystal pigment containing C.I. Pigment Violet 19 (in particular, C.I. Pigment Violet 19/C.I. Pigment Red 202 mixed crystal pigment, or C.I. Pigment Violet 19/C.I. Pigment Red 122 mixed crystal pigment) as a magenta pigment, C.I. Pigment Yellow 120, 150, 151, 155, 180, or 213 as a yellow pigment, and carbon black as a black pigment, high gloss can be exhibited for secondary colors having high image density. It is surmised that this can be realized as a result of high curability being maintained for the base of the film even for secondary colors having high image density in addition to the liquid state of the film surface being controlled as described above.

Furthermore, the ink set of the present invention has high reflection color density and high color saturation. In general, in order to obtain an image having high reflection color density and high color saturation, it is preferable to use a highly colored pigment. In the present invention, it has been confirmed that particularly high reflection color density and high color saturation can be obtained by the use of a phthalocyanine pigment as a cyan pigment, C.I. Pigment Violet 19, C.I. Pigment Red 122 or 202, or a mixed crystal pigment containing C.I. Pigment Violet 19 (in particular, C.I. Pigment Violet 19/C.I. Pigment Red 202 mixed crystal pigment or C.I. Pigment Violet 19/C.I. Pigment Red 122 mixed crystal pigment) as a magenta pigment, C.I. Pigment Yellow 120, 150, 151, 155, 180, or 213 as a yellow pigment, and carbon black as a black pigment.

However, even when a highly colored pigment is used, if the surface of an image has conspicuous unevenness, a cloudy, low reflection color density, and low color saturation image is obtained due to light scattering on the image surface. It is surmised that in the present invention, as described above, since a high gloss image with a smooth image surface can be obtained, a high color saturation image having very high reflection color density is successfully obtained by means of a combination of highly colored pigments together with Component A and Component B.

### Pigment

The pigments contained in each of the cyan, magenta, yellow, and black color inks forming the ink set of the present invention are first explained.

The cyan ink comprises at least a phthalocyanine pigment as a cyan pigment, which is a pigment exhibiting a blue or cyan color. Examples of the phthalocyanine pigment include C.I. Pigment Blue 15, 15:1, 15:2, 15:3, 15:4, 15:6, 16, 17:1, 75, and 79.

The content of the phthalocyanine pigment in the cyan ink is preferably 1.8 to 3 wt% relative to the total weight of the cyan ink, and more preferably 2.0 to 2.8 wt%.

The magenta ink comprises at least C.I. Pigment Violet 19, C.I. Pigment Red 122, C.I. Pigment Red 202, or a mixed crystal pigment containing C.I. Pigment Violet 19 as a magenta pigment, which is a pigment exhibiting a red or magenta color.

Among them, the magenta ink preferably comprises C.I. Pigment Violet 19, C.I. Pigment Red 122, or a mixed crystal pigment containing C.I. Pigment Violet 19, and more preferably comprises a mixed crystal pigment containing C.I. Pigment Violet 19.

Examples of the mixed crystal pigment containing C.I. Pigment Violet 19 include a C.I. Pigment Violet 19/C.I. Pigment Red 202 mixed crystal pigment and a C.I. Pigment Violet 19/C.I. Pigment Red 122 mixed crystal pigment.

The content in the magenta ink of C.I. Pigment Violet 19, C.I. Pigment Red 122 or 202, or a mixed crystal pigment containing C.I. Pigment Violet 19 is preferably 4.0 to 6.0 wt% relative to the total weight of the magenta ink, and more preferably 4.2 to 5.5 wt%.

The yellow ink comprises at least C.I. Pigment Yellow 120, 150, 151, 155, 180, or 213 as a yellow pigment, which is a pigment exhibiting a yellow color.

Among them, the yellow ink preferably comprises C.I. Pigment Yellow 150, 155, or 180, and more preferably comprises C.I. Pigment Yellow 155 or 180.

The content in the yellow ink of C.I. Pigment Yellow 120, 150, 151, 155, 180, or 213 is preferably 2.0 to 4.0 wt% relative to the total weight of the yellow ink, and more preferably 2.1 to 3.8 wt%.

The black ink comprises at least carbon black as a black pigment, which is a pigment exhibiting a black color.

The content of carbon black in the black ink is preferably 2.0 to 3.5 wt% relative to the total weight of the black ink, and more preferably 2.2 to 3.2 wt%.

For dispersion of the pigment, for example, a dispersing machine such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet type jet mill may be used.

In the present invention, when carrying out dispersion of the pigment, it is particularly preferable to add a dispersant described below.

Furthermore, as a dispersion adjuvant, it is also possible to use a synergist, according to the various types of pigment, if necessary. The dispersion adjuvant is preferably added at 1 to 50 parts by weight relative to 100 parts by weight of the pigment.

A dispersion medium used when dispersing the above-mentioned pigment in the ink is not particularly limited, and it may be selected appropriately according to the intended application; for example, a low molecular weight polymerizable compound may be used as the dispersion medium, or a solvent may be used as the dispersion medium. Since the inks of each color forming the ink set of the present invention are actinic radiation-curing inks and the inks are cured after being applied on top of a recording medium, it is preferable for them to be solvent-free. This is because, if the inks are solvent-free, no solvent remains in the image formed from the cured ink, the solvent resistance is improved and the VOC (Volatile Organic Compound) problem of residual solvent is suppressed. From this viewpoint, it is preferable to use the polymerizable compound as the dispersion medium and it is particularly preferable to select a polymerizable compound having a low viscosity in terms of improvement of dispersion suitability and handling properties of an ink.

The average particle size of the pigment is not particularly limited and may be selected as appropriate according to the intended application, but since color generation properties become better when it is smaller, it is preferably on the order of 0.01 to 0.4 µm, and more preferably 0.02 to 0.2 µm. Furthermore, the maximum particle size of the pigment is preferably no greater than 3 µm, and more preferably no greater than 1 µm. The particle size of the pigment can be adjusted by selection of the pigment, dispersant, and dispersion medium, setting of dispersion conditions and filtration conditions, etc., and by controlling the particle size of the pigment clogging of a head nozzle can be suppressed and ink storage stability, transparency, and curing sensitivity can be maintained. In the present invention, since a polymeric dispersant having excellent dispersing properties and stability is preferably contained, even when the above-mentioned various types of pigments in particle form are used, a uniform and stable ink can be prepared.

The particle size of the pigment in the ink may be measured by a known measurement method. Specifically, it may be measured by a centrifugal sedimentation light transmission method, an X-ray transmission method, a laser diffraction/scattering method, or a dynamic light scattering method.

The components contained in common in the cyan ink, the magenta ink, the yellow ink, and the black ink (hereinafter, they are also together called 'inks of each color') forming the ink set of the present invention are now explained.

### (Component A) N-vinyllactam and/or tetrahydrofurfuryl (meth)acrylate

The inks of each color forming the ink set of the present invention comprise (Component A) an *N*-vinyllactam and/or tetrahydrofurfuryl (meth)acrylate.

The *N*-vinyllactam is preferably a compound represented by Formula (A-1).

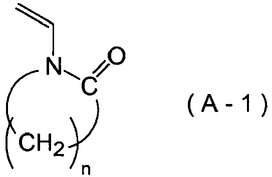

In Formula (A-1), n denotes an integer of 2 to 6; n is preferably an integer of 3 to 6 from the viewpoint of flexibility after the ink is cured, adhesion to a recording medium, and ready availability of starting materials, n is more preferably 3 or 5, and n is particularly preferably 5, which is N-vinylcaprolactam. *N*-vinylcaprolactam is preferable since it has excellent safety, is commonly used and is readily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded to the lactam ring.

The *N*-vinyllactam may be used singly or in a combination of two or more compounds.

The tetrahydrofurfuryl (meth)acrylate may be tetrahydrofurfuryl methacrylate or tetrahydrofurfuryl acrylate, but is preferably tetrahydrofurfuryl acrylate. The two may be used in combination.

The content of Component A in the inks of each color, that is, the content of the *N*-vinyllactam and/or tetrahydrofurfuryl (meth)acrylate, is preferably 5 to 35 wt% relative to the total weight of the ink, more preferably 8 to 24 wt%, yet more preferably 9 to 20 wt%, and particularly preferably 10 to 18 wt%. When in the above-mentioned range, a curing profile is promoted in which, while strongly promoting the curability of the interior of a printed material, the outermost surface alone of a cured film is selectively maintained in a liquid state for a long period of time, and a printed material having high surface gloss and inconspicuous stripe unevenness is obtained.

### (Component B) Compound represented by Formula (1)

The inks of each color forming the ink set of the present invention comprise (Component B) a compound represented by Formula (1) at 21 to 55 wt% relative to the total weight of the ink. In accordance with Component B being contained in the above-mentioned range, the ink set of the present invention can give an image having excellent surface gloss and little stripe unevenness. 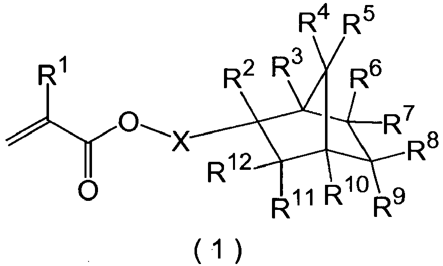 (In the Formula, R¹ denotes a hydrogen atom or a methyl group, X denotes a single bond or a divalent linking group, and R² to R¹² independently denote a hydrogen atom or an alkyl group.)

The compound represented by Formula (1) may be an acrylate compound or a methacrylate compound, but is preferably an acrylate compound, that is, R¹ is a hydrogen atom.

The divalent linking group denoted by X in Formula (1) is not particularly limited as long as the effects of the present Invention are not greatly impaired; it is preferably a divalent hydrocarbon group or a divalent group in which a hydrocarbon group and an ether bond are combined, and is more preferably a divalent hydrocarbon group, a poly(alkyleneoxy) group, or a poly(alkyleneoxy)alkyl group. Furthermore, the number of carbons of the divalent linking group is preferably 1 to 60, and more preferably 1 to 40.

X in Formula (1) is preferably a single bond, a divalent hydrocarbon group, or a divalent group in which a hydrocarbon group and an ether bond are combined, more preferably a single bond or a divalent hydrocarbon group, and particularly preferably a single bond.

The alkyl group denoted by R² to R¹² in Formula (1) is preferably an alkyl group having 1 to 8 carbons, more preferably an alkyl group having 1 to 4 carbons, and particularly preferably a methyl group. Furthermore, the alkyl group denoted by R² to R¹² may have a straight chain, branched, or ring structure.

It is preferable that R² to R¹² in Formula (1) are independently a hydrogen atom or an alkyl group having 1 to 8 carbons, more preferably a hydrogen atom or an alkyl group having 1 to 4 carbons, and yet more preferably a hydrogen atom or a methyl group.

Furthermore, it is particularly preferable that R² to R¹² in Formula (1) are all hydrogen atoms or R³ to R⁵ are methyl groups and R² and R⁶ to R¹² are hydrogen atoms, and it is most preferable that R³ to R⁵ are methyl groups and R² and R⁶ to R¹² are hydrogen atoms.

Specific examples of compounds represented by Formula (1) include, but of course are not limited to, compounds (B-1) to (B-6) shown below.

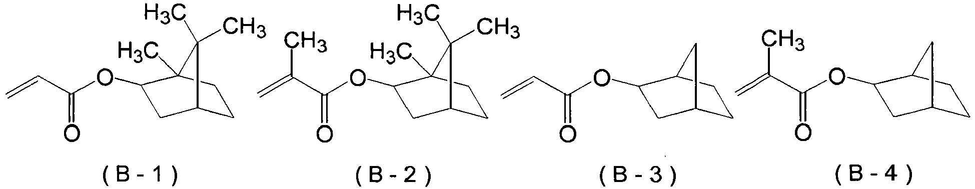

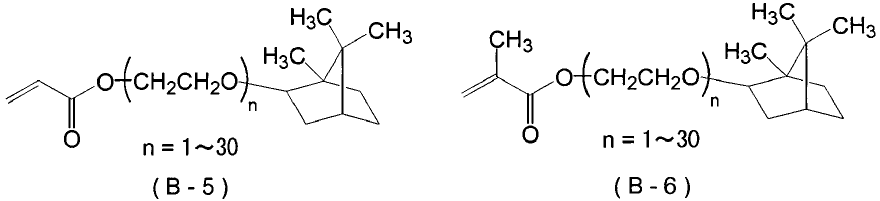

Among them, isobornyl acrylate (B-1), isobornyl methacrylate (B-2), norbornyl acrylate (B-3), and norbornyl methacrylate (B-4) are preferable, isobornyl acrylate (B-1) and isobornyl methacrylate (B-2) are more preferable, and isobornyl acrylate (B-1) is particularly preferable.

The content of the compound represented by Formula (1) in the inks of each color is 21 to 55 wt% relative to the total weight of the ink, preferably 24 to 48 wt%, more preferably 28 to 45 wt%, and yet more preferably 32 to 44 wt%.

When the content of the compound represented by Formula (1) is less than 21 wt% relative to the total weight of the ink, the outermost surface of a cured film does not receive sufficient oxygen polymerization inhibition, and the outermost surface of a fired droplet cannot be maintained in a liquid state for a long period of time by sufficiently decreasing the initial reaction rate. As a result, stripe unevenness might occur in an image obtained, or sufficient surface gloss might not be obtained. Furthermore, when the content of the compound represented by Formula (1) exceeds 55 wt% relative to the total weight of the ink, the curability of the interior is degraded, and stripe unevenness might become conspicuous.

### (Component C) Polymerization initiator

The inks of each color forming the ink set of the present invention comprise (Component C) a polymerization initiator.

The polymerization initiator is a compound that forms a polymerization initiating species by absorbing external energy such as above-mentioned actinic radiation. The polymerization initiator may be used singly or in a combination of two or more compounds.

Preferred examples of the polymerization initiator that can be used in the present invention include a radical polymerization initiator, and more preferred examples thereof include an α-hydroxy ketone compound, a monoacylphosphine compound, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon-halogen bond. Specific examples of the polymerization initiator include radical polymerization initiators described in JP-A-2008-208190. Among them, an aromatic ketone and acylphosphine compound can preferably be cited, and an α-hydroxy ketone compound and an acylphosphine compound can more preferably be cited.

The aromatic ketone is preferably an α-hydroxyketone compound.

Examples thereof include 1-[4-(2-hydroxyethoxy)phenyl]-2-hydroxy-2-methyl-1-propan-1-one, 2-hydroxy-2-methyl-1-phenyl-propan-1-one, and 1-hydroxycyclohexyl phenyl ketone. Among them, 1-hydroxycyclohexyl phenyl ketone compound is preferable. The 1-hydroxycyclohexyl phenyl ketone compound referred to in the present invention comprises a compound obtained by substituting 1-hydroxycyclohexyl phenyl ketone with any substituent. The substituent may be selected freely from a range that enables an ability as a radical polymerization initiator to be exhibited, and specific examples thereof include an alkyl group having 1 to 4 carbons.

Preferred examples of the acylphosphine compound include acylphosphine oxide compounds described in JP-A-2008-208190, and among them a monoacylphosphine oxide compound is more preferable.

Specific examples of the monoacylphosphine compound include methyl isobutyrylmethylphosphinate, methyl isobutyrylphenylphosphinate, methyl pivaloylphenylphosphinate, methyl 2-ethylhexanoylphenylphosphinate, isopropyl pivaloylphenylphosphinate, methyl *p*-tolylphenylphosphinate, methyl *o*-tolylphenylphosphinate, methyl 2,4-dimethylbenzoylphenylphosphinate, isopropyl *p*-*t*-butylbenzoylphenylphosphinate, methyl acryloylphenylphosphinate, isobutyryldiphenylphosphine oxide, 2-ethylhexanoyldiphenylphosphine oxide, *o*-tolyldiphenylphosphine oxide, *p*-*t-*butylbenzoyldiphenylphosphine oxide, 3-pyridylcarbonyldiphenylphosphine oxide, acryloyldiphenylphosphine oxide, benzoyldiphenylphosphine oxide, vinyl pivaloylphenylphosphinate, adipoyl-bis-diphenylphosphine oxide, pivaloyldiphenylphosphine oxide, *p*-tolyldiphenylphosphine oxide, 4-(*t-*butyl)benzoyldiphenylphosphine oxide, terephthaloyl-bis-diphenylphosphine oxide, 2-methylbenzoyldiphenylphosphine oxide, versatoyldiphenylphosphine oxide, 2-methyl-2-ethylhexanoyldiphenylphosphine oxide, 1-methylcyclohexanoyldiphenylphosphine oxide, isopropyl pivaloylphenylphosphinate and 2,4,6-trimethylbenoyldiphenylphosphine oxide, and among them, 2,4,6-trimethylbenoyldiphenylphosphine oxide is preferable.

The inks of each color preferably comprise α-hydroxyketone compound and/or acylphosphine oxide compound and more preferably comprises α-hydroxyketone compound and acylphosphine oxide compound. Specifically, the inks preferably comprise α-hydroxyketone compound and/or monoacylphosphine oxide compound, and from the viewpoint of the curability and the anti-blocking properties, the combination of α-hydroxyketone compound and monoacylphosphine oxide compound is more preferable.

The inks of each color preferably contain a sensitizer in order to promote decomposition of the photopolymerization initiator by absorbing specific actinic radiation.

Examples of the sensitizer include polynuclear aromatic compounds (e.g. pyrene, perylene, triphenylene, 2-ethyl-9,10-dimethoxy anthracene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), coumarins (e.g. 7-diethylamino-4-methylcoumarin), and thioxanthones (e.g. thioxanthone, 2-isopropyl thioxanthone, 4-isopropyl thioxanthone).

Among them, thioxantones are preferably.

The sensitizer may be used singly or in a combination of two or more compounds.

From the viewpoint of curability and uniformity of the degree of curing within a cured film, the content of the polymerization initiator in the inks of each color is preferably 0.01 to 35 wt% relative to the total content of polymerizable compounds, more preferably 0.5 to 20 wt%, and yet more preferably 1.0 to 15 wt%.

Furthermore, when a sensitizer is used, the total content of the polymerization initiator relative to the content of the sensitizer is preferably in the range of 200:1 to 1:200 as a ratio by weight of polymerization initiator:sensitizer, more preferably 50:1 to 1:50, and yet more preferably 20:1 to 1:5.

When a sensitizer is used, from the viewpoint of ink coloration properties, the content of the sensitizer in the inks of each color is preferably 0.01 to 20 wt% relative to the total weight of the ink, more preferably 0.1 to 15 wt%, and yet more preferably 0.5 to 10 wt%.

### (Component D) (Meth)acrytate compound containing chain-form hydrocarbon group having 8 to 13 carbons

From the viewpoint of improving the surface gloss of a printed material, the inks of each color forming the ink set of the present invention preferably comprise (Component D) a (meth)acrylate compound containing a chain-form hydrocarbon group having 8 to 13 carbons.

The chain-form hydrocarbon group in Component D may be a straight chain hydrocarbon group or a branched chain hydrocarbon group.

Component D is preferably a (meth)acrylic acid ester of a chain-form hydrocarbon monoalcohol having 8 to 13 carbons, and more preferably a (meth)acrylic acid ester of a chain-form hydrocarbon monoalcohol having 10 to 13 carbons.

Component D may be an acrylate compound or a methacrylate compound, but is preferably an acrylate compound.

Specific examples of Component D include octyl (meth)acrylate, isooctyl (meth)acrylate, nonyl (meth)acrylate, decyl (meth)acrylate, isodecyl (meth)acrylate, lauryl (meth)acrylate, and tridecyl (meth)acrylate. Among them, isooctyl (meth)acrylate, decyl (meth)acrylate, isodecyl (meth)acrylate, lauryl (meth)acrylate, and tridecyl (meth)acrylate are preferable, isooctyl (meth)acrylate, isodecyl (meth)acrylate, and tridecyl (meth)acrylate are more preferable, and isodecyl (meth)acrylate is particularly preferable.

The content of Component D in the inks of each color is preferably 3 to 25 wt% relative to the total weight of the ink, more preferably 5 to 20 wt%, yet more preferably 8 to 18 wt%, and particularly preferably 10 to 16 wt%. When in the above-mentioned range, an ink that gives a cured film with little tackiness and a printed material having excellent surface gloss can be obtained.

### (Component E)

The inks of each color forming the ink set of the present invention may comprise a polymerizable compound other than Component A, Component B, and Component D (Component E).

The content of phenoxyethyl (meth)acrylate in the inks of each color is preferably 1 to 30 wt% relative to the total weight of the ink, more preferably 3 to 25 wt%, and particularly preferably 5 to 20 wt%.

Furthermore, when the inks of each color comprise a polyfunctional polymerizable compound, the content of the polyfunctional polymerizable compound is preferably 1 to 20 wt% relative to the total weight of the ink, more preferably 2 to 10 wt%, and particularly preferably 3 to 7 wt%.

### (Component F) Oligomer

The inks of each color forming the ink set of the present invention preferably comprise (Component F) an oligomer.

The oligomer is generally a polymer in which a limited number (generally 5 to 100) of monomers are bonded, and known compounds called oligomers may be selected freely, but in the present invention it is preferable to select a polymer having a weight-average molecular weight of 400 to 10,000 (more preferably 500 to 5,000).

The oligomer may have a radically polymerizable group. The radically polymerizable group is preferably an ethylenically unsaturated group, and more preferably a (meth)acryloxy group.

The oligomer in the present invention may be any oligomer, and examples thereof include an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, an acrylate oligomer, a methacrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester acrylate, a polyamide oligomer, a polyisocyanate oligomer), and an addition-condensation oligomer (a phenolic resin, an amino resin, a xylene resin, a ketone resin, etc.). Among them an oligoester (meth)acrylate is preferable, and among them a urethane (meth)acrylate, a polyester (meth)acrylate, and an epoxy (meth)acrylate are preferable, and a urethane (meth)acrylate is more preferable.

As the urethane (meth)acrylate, an aliphatic urethane (meth)acrylate and an aromatic urethane (meth)acrylate may preferably be cited, and an aliphatic urethane (meth)acrylate may more preferably be cited.

Furthermore, the urethane (meth)acrylate is preferably a tetra- or lower-functional urethane (meth)acrylate, and more preferably a di- or lower-functional urethane (meth)acrylate.

In accordance with a urethane (meth)acrylate being contained, an ink having excellent adhesion to a substrate and excellent curability is obtained.

With respect to the oligomer, 'Origomar Handobukku (Oligomer Handbook)' (edited by Junji Furukawa, The Chemical Daily Co., Ltd.) may also be referred to.

As oligomer commercial products, examples of urethane (meth)acrylates include R1204, R1211, R1213, R1217, R1218, R1301, R1302, R1303, R1304, R1306, R1308, R1901, and R1150 manufactured by Dai-Ichi Kogyo Seiyaku Co., Ltd., the EBECRYL series (e.g. EBECRYL 230, 270, 4858, 8402, 8804, 8807, 8803, 9260, 1290, 1290K, 5129, 4842, 8210, 210, 4827, 6700, 4450, and 220) manufactured by Daicel-Cytec Company Ltd., NK Oligo U-4HA, U-6HA, U-15HA, U-108A, and U200AX manufactured by Shin-Nakamura Chemical Co., Ltd., Aronix M-1100, M-1200, M-1210, M-1310, M-1600, and M-1960 manufactured by Toagosei Co., Ltd., and CN964A85, CN967B70, CN981, CNSP006, CN9002, CN9001, CN982B85, CN966H90, CN956A80, CN9200, CN9290, CN9293, CN9276, CN9251, CN9251, CN922, CN962, CN965, CN9245, CN952B75, CN910A70, CN9278B80, CN9245W80, CN9250A75, CN9250B75, CN9260D75, CN9242A80, CN988B80, CN9170S80, CN982A75, CN976, CN9167, CN9170, CN9165, CN9130, CN9196, and CN975 manufactured by Sartomer Company, Inc.

Examples of polyester (meth)acrylates include the EBECRYL series (e.g. EBECRY L770, IRR467, 81, 84, 83, 80, 675, 800, 810, 812, 1657, 1810, IRR302, 450, 670, 830, 870, 1830, 1870, 2870, IRR267, 813, IRR483, 811, etc.) manufactured by Daicel-Cytec Company Ltd., Aronix M-6100, M-6200, M-6250, M-6500, M-7100, M-8030, M-8060, M-8100, M-8530, M-8560, and M-9050 manufactured by Toagosei Co., Ltd., and CN293, CN294E, CN255, CN2281, CN2505, CN2881, CN2271 E, CN292, CN203, CN UVP210, CN2282, CN2255, CN2540, CN2560, and CN2619 manufactured by Sartomer Company Inc.

Examples of epoxy (meth)acrylates include the EBECRYL series (e.g. EBECRYL 600, 860, 2958, 3411, 3600, 3605, 3700, 3701, 3703, 3702, 3708, RDX63182, 6040, etc.) manufactured by Daicel-Cytec Company Ltd., and CN173, CN1300, CN111, CN104, CN186, CN132, CN156, CN116, and CN133 manufactured by Sartomer Company Inc.

With regard to the oligomer, one type thereof may be used on its own or two or more types may be used in combination.

The content of the oligomer in the inks of each color is, relative to the total weight of the ink, preferably 0.1 to 50 wt%, more preferably 0.5 to 20 wt%, and yet more preferably 1 to 10 wt%.

### (Component G) Surfactant

The inks of each color forming the ink set of the present invention may comprise (Component G) a surfactant in order to impart discharge properties that are stable for a long period of time.

In addition, the inks of each color either do not contain a silicone-based surfactant or a fluorine-based surfactant or contain a silicone-based surfactant and a fluorine-based surfactant at a total content relative to the total weight of the ink of greater than 0 wt% but less than 0.1 wt%, preferably do not contain them or contain them at greater than 0 wt% but no greater than 0.08 wt%, more preferably do not contain them or contain them at greater than 0 wt% but no greater than 0.05 wt%, yet more preferably do not contain them or contain them at greater than 0 wt% but no greater than 0.03 wt%, and particularly preferably do not contain them.

Although the reason is not clear, it is surmised that when drawing is carried out, particularly in multipass mode, a silicone-based surfactant and a fluorine-based surfactant, which reduce the surface energy of a cured film, tend to greatly increase the contact angle of a fired droplet that is superimposed on an ink droplet that has been fired first and cured or semicured, and the smaller the amount thereof added, the better the surface gloss of an image. In the above-mentioned range, an image having high color saturation and high reflection color density, excellent surface gloss, and little stripe unevenness can be obtained.

As a surfactant other than silicone-based and fluorine-based surfactants, those described in JP-A-62-173463 and JP-A-62-183457 can be cited. Examples thereof include an anionic surfactant such as a dialkyl sulfosuccinate salt, an alkylnaphthalene sulfonic acid salt, or a fatty acid salt, a nonionic surfactant such as a polyoxyethylene alkyl ether, a polyoxyethylene alkyl allyl ether, an acetylene glycol, or a polyoxyethylene-polyoxypropylene block copolymer, and a cationic surfactant such as an alkylamine salt or a quaternary ammonium salt.

### (Component H) Dispersant

The inks of each color forming the ink set of the present invention preferably comprise (Component H) a dispersant. Especially, when the pigment is used, the ink preferably comprises a dispersant in order to stably disperse the pigment in the ink. As the dispersant, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), Disperse Aid 6, Disperse Aid 8, Disperse Aid 15, and Disperse Aid 9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), lonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink is appropriately selected according to the intended purpose, and is preferably 0.05 to 15 wt% relative to the weight of the total ink.

### Other components

The inks of each color forming the ink set of the present invention may comprise as necessary, in addition to the above-mentioned components, a co-sensitizer, a UV absorber, an antioxidant, an antifading agent, a conductive salt, a solvent, a polymer compound, a basic compound, etc. They are described in JP-A-2009-221416 and may be used in the present invention as well.

Furthermore, from the viewpoint of storage properties and suppression of head clogging, the inks of each color forming the ink set of the present invention preferably comprise a polymerization inhibitor.

The polymerization inhibitor is preferably added at 200 to 20,000 ppm relative to the total amount of the ink.

Examples of the polymerization inhibitor include a nitroso-based polymerization inhibitor, a hindered amine-based polymerization inhibitor, hydroquinone, benzoquinone, *p*-methoxyphenol, TEMPO, TEMPOL, and Al cupferron.

### Ink physical properties

The inks of each color forming the ink set of the present invention have a surface tension of 29.0 to 33.4 mN/m, preferably 29.3 to 33.2 mN/m, more preferably 29.7 to 33.0 mN/m, and yet more preferably 30.0 to 32.8 mN/m. The value for the surface tension is a value at 25°C.

Although the reason is not clear, it is surmised that, when drawing is carried out, particularly in multipass mode, if the ink has a lower surface tension than the above-mentioned range, the contact angle of a fired droplet that is superimposed on an ink droplet that has been fired first and cured or semicured is greatly increased, and as a result the surface unevenness increases, the surface gloss decreases, and stripe unevenness tends to become conspicuous; when it is higher than the above-mentioned range, the speed at which a fired droplet that has landed on a printed material spreads while wet over a recording medium or a previously fired droplet becomes low, and as a result the surface unevenness increases, the surface gloss decreases, and stripe unevenness tends to become conspicuous. In the above-mentioned range, an image having high color saturation and high reflection color density, excellent surface gloss, and little stripe unevenness can be obtained.

Furthermore, in the present invention, while taking into consideration discharge properties, it is preferable to use inks of each color having a viscosity at 25°C of no greater than 40 mPa·s. It is more preferably 5 to 30 mPa·s, and yet more preferably 7 to 22 mPa·s. Furthermore, the viscosity at the discharge temperature (preferably 25°C to 80°C, more preferably 25°C to 50°C) is preferably 5 to 15 mPa·s, and more preferably 8 to 12 mPa·s. It is preferable for the compositional ratio of the inks of each color to be adjusted as appropriate so that the viscosity is in the above-mentioned range. By setting the viscosity at room temperature (25°C) so that it is high, even when a porous recording medium (support) is used, it becomes possible to prevent the ink from permeating into the recording medium, thus reducing uncured monomer. Moreover, it is possible to suppress ink spreading when ink liquid droplets land, and as a result the image quality is improved.

### Inkjet recording method, inkjet recording equipment, and printed material

The inkjet recording method of the present invention is a method in which an image is formed by discharging onto a recording medium (support, recording material, etc.) the inks of each color forming the ink set for inkjet recording of the present invention and curing the inks by irradiating the inks discharged onto the recording medium with actinic radiation.

More specifically, the inkjet recording method of the present invention comprises (a¹) a step of discharging onto a recording medium at least each color ink of the ink set for inkjet recording of the present invention, and, (b¹) a step of curing the ink by irradiating the discharged ink with actinic radiation. The inkjet recording method of the present invention comprises the steps (a¹) and (b¹) above and thus forms an image from the ink cured on the support.

The printed material of the present invention is recorded by the inkjet recording method of the present invention.

The inkjet recording device described in detail below can be used in the step (a¹) of the inkjet recording method of the present invention.

### Inkjet recoding device

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink onto a recording medium in step (a¹) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink, a supply pipe, an ink supply tank immediately before an inkjet head, a filter, and a piezo system inkjet head per inks of each color forming the ink set of the present invention. The piezo system inkjet head may be driven so as to discharge a multisize dot of preferably 1 to 100 pL, more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, since it is desirable for the inks of each color to be discharged at a constant temperature, the inkjet recording device is preferably equipped with a temperature stabilizer for stabilizing the temperature of the inks. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

The ink is preferably discharged using the above mentioned inkjet recording device after being heated to preferably 25°C to 80°C, and more preferably 25°C to 50°C, so as to reduce the viscosity of the ink to preferably 3 to 15 mPa·s, and more preferably 3 to 13 mPa·s. In particular, it is preferable to use the ink having an ink viscosity at 25°C of not more than 50 mPa·s since a good dischargeability can be obtained. By employing this method, high discharge stability can be realized.

The radiation curing type ink such as the inks of each color forming the ink set of the present invention generally has a viscosity that is higher than that of a water-based ink used for an inkjet recording ink, and variation in viscosity due to a change in temperature at the time of discharge is large. Viscosity variation in the ink has a large effect on changes in liquid droplet size and changes in liquid droplet discharge speed and, consequently, causes the image quality to be degraded. It is therefore necessary to maintain the ink discharge temperature as constant as possible. In the present invention, the control range for the temperature of ink is preferably ±5°C of a set temperature, more preferably ±2°C of the set temperature, and yet more preferably ±1°C of the set temperature.

The step (b¹) of curing the ink by irradiating the discharged ink with actinic radiation is now explained.

The ink discharged onto the recording medium cures upon exposure to actinic radiation. This is due to a initiating species such as a radical being generated by decomposition of the photopolymerization initiator contained in the ink used of the present invention by irradiation with actinic radiation, the initiating species functioning so as to make a polymerization reaction of a radically polymerizable compound take place and to promote it. In this process, if a sensitizer is present together with the polymerization initiator in the ink, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizing dye, the peak wavelength of the actinic radiation is, for example, 200 to 600 nm, preferably 300 to 450 nm, more preferably 320 to 420 nm, and yet more preferably 340 to 400, and particularly preferably 340 to 400 nm.

Furthermore, the photopolymerization initiation system of the inks of each color forming the ink set of the present invention has sufficient sensitivity for low output actinic radiation. The actinic radiation is applied therefore so that the illumination intensity on the exposed surface is, for example, 10 to 4,000 mW/cm², and preferably 20 to 2,500 mW/cm².

As an actinic radiation source, a mercury lamp, a gas/solid laser, etc. are mainly used, and for UV photocuring inkjet ink a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, the example of the LED includes a LED, disclosed in US Pat. No. 6,084,250, that can emit actinic radiation whose wavelength is centered between 300 nm and 370 nm. Furthermore, another violet LED is available, and irradiation can be carried out with radiation of a different UV bandwidth. The actinic radiation source preferable in the present invention is a UV-LED, and a UV-LED having a peak wavelength at 340 to 400 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The inks of each color forming the ink set of the present invention are desirably exposed to such actinic radiation for preferably 0.01 to 120 sec., more preferably 0.01 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (preferably 0.01 to 0.5 sec., more preferably 0.01 to 0.3 sec., and particularly preferably 0.01 to 0.15 sec.) has elapsed from when the ink has landed. By controlling the time from ink landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such an inkjet recording method as described above, it is possible to maintain a uniform dot diameter for landed ink even for various types of recording medium having different surface wettability, thereby improving the image quality. In order to obtain a color image, it is preferable to superimpose colors in order from those with a high lightness. By superimposing inks in order from one with high lightness, it is easy for radiation to reach a lower ink, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way, the inks of each color forming the ink set of the present invention may be cured by irradiation with actinic radiation in high sensitivity and form an image on the surface of the recording medium.

In the inkjet recording method of the present invention, the order in which cyan, magenta, yellow, and black inks are discharged is not particularly limited, but it is preferable to apply to a recording medium from a colored ink having a high lightness, they are preferably applied on top of the recording medium in the order yellow → cyan → magenta → black. Furthermore, when white is additionally used, they are preferably applied on top of the recording medium in the order white → yellow → cyan → magenta → black.

Moreover, the present invention is not limited thereto, and an ink set comprising a total of seven colors, that is, light cyan, light magenta inks and cyan, magenta, black, white, and yellow dark inks may preferably be used, and in this case they are applied on top of the recording medium in the order white → light cyan → light magenta → yellow → cyan → magenta → black.

Furthermore, the inkjet recording method of the present invention comprises carrying out drawing using the ink set for inkjet recording of the present invention with multiple, that is, 2 to 16 passes for the same area. That is, drawing is carried out by a method in which a specific area of a recording medium drawn by one head unit operation is overprinted by operating the head unit 2 to 16 times. It is more preferably 4 to 8 times. It is surmised that in the above-mentioned range, overlapping between fired droplets becomes good, the fired droplets spread while wet, and as a result an image having high gloss can be obtained. Moreover, it is surmised that stripes between image swaths of the head are less conspicuous, and an image having inconspicuous stripe unevenness is obtained.

Furthermore, in the present invention, in terms of ease of optimizing drawing conditions it is preferable to use a shuttle scanning method in which a recording medium is static and a head is operated, but a mode in which a head is fixed and a recording medium is operated can also be considered as an embodiment of the present invention. In the case of the shuttle scanning method, from the viewpoint of reducing the dependence of an image on the direction in which the head is operated it is preferable to place actinic radiation light sources at opposite ends of the head unit.

The present invention preferably employs a head unit in which heads for at least cyan, magenta, yellow, and black are mounted in parallel in an appropriate order, and in shuttle scanning it is preferable to overprint each area of a printed material with inks of all of the required colors before the first irradiation with actinic radiation after inkjet discharge. For example, in the case of red, the first actinic radiation exposure is carried out after overprinting magenta and yellow, and in the case of four color black, the first actinic radiation exposure is carried out after overprinting cyan, magenta, yellow, and black. It is preferable that drawing is carried out by repeating 2 to 16 times for the same area shuttle scanning in which a process of overprinting all of the required colors and subsequently curing by means of left and right lamps of a head unit is carried out. For example, if shuttle scanning drawing were to be carried out by providing light sources between the heads so as to cure separately for each color, there would be little overlapping of fired droplets in a liquid state, and gloss might be degraded.

In the present invention, the recording medium is not particularly limited, and the recording medium known as a support or a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium may suitably be used.

### EXAMPLES

The present invention is explained below more specifically by reference to Examples and Comparative Examples. However, the present invention should not be construed as being limited by these Examples.

'Parts' in the description below means 'parts by weight' unless otherwise specified.

The materials used in the present invention are as follows.
Irgalite Blue GLVO (phthalocyanine pigment, C.I. Pigment Blue 15:4, Ciba Specialty Chemicals)
Cinquasia Magenta RT355D (C.I. Pigment Violet 19/C.I. Pigment Red 202 mixed crystal pigment, Ciba Specialty Chemicals)
Cromophtal Jet Magenta 2BC (C.I. Pigment Violet 19/C.I. Pigment Red 202 mixed crystal pigment, Ciba Specialty Chemicals)
Irgazin Magenta 2012 (C.I. Pigment Violet 19/C.I. Pigment Red 122 mixed crystal pigment, Ciba Specialty Chemicals)
Hostaperm RED E5B02 (C.I. Pigment Violet 19 pigment, Clariant)
Inkjet Magenta E02 (C.I. Pigment Red 122 pigment, Clariant)
Cinquasia Magenta B RT343D (C.I. Pigment Red 202 pigment, Ciba Specialty Chemicals)
Cromophtal Red A3B (C.I. Pigment Red 177 pigment, Ciba Specialty Chemicals)
Novoperm Bordeaux HF3R (C.I. Pigment Violet 32 pigment, Clariant)
Novoperm Yellow H2G (C.I. Pigment Yellow 120 pigment, Clariant)
Novoperm Yellow PHG (C.I. Pigment Yellow 180 pigment, Clariant)
Novoperm Yellow HN4G (C.I. Pigment Yellow 150 pigment, Clariant)
Hostaperm Yellow H4G (C.I. Pigment Yellow 151 pigment, Clariant)
Novoperm Yellow 4G01 (C.I. Pigment Yellow 155 pigment, Clariant)
Novoperm Yellow H5G (C.I. Pigment Yellow 213 pigment, Clariant)
Cromophtal Yellow 8GN (C.I. Pigment Yellow 128 pigment, Ciba Specialty Chemicals)
Hostaperm Yellow H3G (C.I. Pigment Yellow 154 pigment, Clariant)
Special Black 250 (carbon black pigment, Degussa)
SOLSPERSE 32000 (dispersant, Lubrizol)
V-CAP (N-vinylcaprolactam, ISP)
SR285 (tetrahydrofurfuryl acrylate, Sartomer)
SR9003 (propylene glycol-modified neopentyl glycol diacrylate, Sartomer)
SR506 (isobornyl acrylate, Sartomer)
SR395 (isodecyl acrylate, Sartomer)
CN964A85 (difunctional aliphatic urethane acrylate, containing 15 wt% of tripropylene glycol diacrylate, Sartomer)
FIRSTCURE ST-1 (polymerization inhibitor, mixture of tris(N-nitroso-N-phenylhydroxyamine) aluminum salt (10 wt%) and phenoxyethyl acrylate (90 wt%), Chem First)
LUCIRIN TPO (photopolymerization initiator, 2,4,6-trimethylbenzoyldiphenylphosphine oxide, BASF)
IRGACURE 184 (photopolymerization initiator, 1-hydroxycyclohexyl phenyl ketone, BASF)
Speedcure ITX (photopolymerization initiator, isopropylthioxanthone, LAMBSON)
TEGORAD 2100 (silicone-based surfactant, Degussa)

### Preparation of cyan mill base CM (containing phthalocyanine pigment)

300 parts by weight of Irgalite Blue GLVO, 620 parts by weight of SR9003, and 80 parts by weight of SOLSPERSE 32000 were mixed by stirring, thus giving cyan mill base CM. Preparation of cyan mill base CM was carried out by dispersing using a Motor Mill M50 disperser (Eiger Machinery, Inc.) with zirconia beads having a diameter of 0.65 mm at a peripheral speed of 9 m/s for 4 hours.

### Preparation of magenta mill base MM1 (containing C.I. Pigment Violet 19/C.I. Pigment Red 202 mixed crystal pigment)

300 parts by weight of Cinquasia Magenta RT355D, 600 parts by weight of SR9003, and 100 parts by weight of SOLSPERSE 32000 were mixed by stirring, thus giving magenta mill base MM1. Preparation of magenta mill base MM1 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM2 (containing C.I. Pigment Violet 19/C.I. Pigment Red 202 mixed crystal pigment)

300 parts by weight of Cromophtal Jet Magenta 2BC, 600 parts by weight of SR9003, and 100 parts by weight of SOLSPERSE 32000 were mixed by stirring, thus giving magenta mill base MM2. Preparation of magenta mill base MM2 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM3 (containing C.I. Pigment Violet 19/C.I. Pigment Red 122 mixed crystal pigment)

300 parts by weight of Irgazine Magenta 2012, 600 parts by weight of SR9003, and 100 parts by weight of SOLSPERSE 32000 were mixed by stirring, thus giving magenta mill base MM3. Preparation of magenta mill base MM3 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM4 (containing C.I. Pigment Violet 19)

300 parts by weight of Hostaperm RED E5B02, 600 parts by weight of SR9003, and 100 parts by weight of SOLSPERSE 32000 were mixed by stirring, thus giving magenta mill base MM4. Preparation of magenta mill base MM4 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM5 (containing C.I. Pigment Red 122)

300 parts by weight of Inkjet Magenta E02, 600 parts by weight of SR9003, and 100 parts by weight of SOLSPERSE 32000 were mixed by stirring, thus giving magenta mill base MM5. Preparation of magenta mill base MM5 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM6 (containing C.I. Pigment Red 202)

300 parts by weight of Cinquasia Magenta RT343D, 600 parts by weight of SR9003, and 100 parts by weight of SOLSPERSE 32000 were mixed by stirring, thus giving magenta mill base MM6. Preparation of magenta mill base MM6 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM7 (containing C.I. Pigment Violet 32)

300 parts by weight of Novoperm Bordeaux HF3R, 600 parts by weight of SR9003, and 100 parts by weight of SOLSPERSE 32000 were mixed by stirring, thus giving magenta mill base MM7. Preparation of magenta mill base MM7 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM8 (containing C.I. Pigment Red 179)

300 parts by weight of Cromophtal Red A3B, 600 parts by weight of SR9003, and 100 parts by weight of SOLSPERSE 32000 were mixed by stirring, thus giving magenta mill base MM8. Preparation of magenta mill base MM8 was carried out by dispersing using a Motor Mill M50 disperser (Eiger Machinery, Inc.) with zirconia beads having a diameter of 0.65 mm at a peripheral speed of 9 m/s for 10 hours.

### Preparation of yellow mill base YM1 (containing C.I. Pigment Yellow 155)

300 parts by weight of Novoperm Yellow 4G01, 600 parts by weight of SR9003, and 100 parts by weight of SOLSPERSE 32000 were mixed by stirring, thus giving yellow mill base YM1. Preparation of yellow mill base YM1 was carried out by dispersing using a Motor Mill M50 disperser (Eiger Machinery, Inc.) with zirconia beads having a diameter of 0.65 mm at a peripheral speed of 9 m/s for 5 hours.

### Preparation of yellow mill base YM2 (containing C.I. Pigment Yellow 180)

300 parts by weight of Novoperm Yellow PHG, 600 parts by weight of SR9003, and 100 parts by weight of SOLSPERSE 32000 were mixed by stirring, thus giving yellow mill base YM2. Preparation of yellow mill base YM2 was carried out by dispersing using a Motor Mill M50 disperser (Eiger Machinery, Inc.) with zirconia beads having a diameter of 0.65 mm at a peripheral speed of 9 m/s for 10 hours.

### Preparation of yellow mill base YM3 (containing C.I. Pigment Yellow 150)

300 parts by weight of Novoperm Yellow HN4G, 600 parts by weight of SR9003, and 100 parts by weight of SOLSPERSE 32000 were mixed by stirring, thus giving yellow mill base YM3. Preparation of yellow mill base YM3 was carried out by dispersing using a Motor Mill M50 disperser (Eiger Machinery, Inc.) with zirconia beads having a diameter of 0.65 mm at a peripheral speed of 9 m/s for 5 hours.

### Preparation of yellow mill base YM4 (containing C.I. Pigment Yellow 151)

300 parts by weight of Hostaperm Yellow H4G, 600 parts by weight of SR9003, and 100 parts by weight of SOLSPERSE 32000 were mixed by stirring, thus giving yellow mill base YM4. Preparation of yellow mill base YM4 was carried out by dispersing using a Motor Mill M50 disperser (Eiger Machinery, Inc.) with zirconia beads having a diameter of 0.65 mm at a peripheral speed of 9 m/s for 5 hours.

### Preparation of yellow mill base YM5 (containing C.I. Pigment Yellow 120)

300 parts by weight of Novoperm Yellow H2G, 600 parts by weight of SR9003, and 100 parts by weight of SOLSPERSE 32000 were mixed by stirring, thus giving yellow mill base YM5. Preparation of yellow mill base YM5 was carried out by dispersing using a Motor Mill M50 disperser (Eiger Machinery, Inc.) with zirconia beads having a diameter of 0.65 mm at a peripheral speed of 9 m/s for 10 hours.

### Preparation of yellow mill base YM6 (containing C.I. Pigment Yellow 213)

300 parts by weight of Novoperm Yellow H5G, 600 parts by weight of SR9003, and 100 parts by weight of SOLSPERSE 32000 were mixed by stirring, thus giving yellow mill base YM6. Preparation of yellow mill base YM6 was carried out by dispersing using a Motor Mill M50 disperser (Eiger Machinery, Inc.) with zirconia beads having a diameter of 0.65 mm at a peripheral speed of 9 m/s for 5 hours.

### Preparation of yellow mill base YM7 (containing C.I. Pigment Yellow 128)

300 parts by weight of Cromophtal Jet Magenta 2BC, 600 parts by weight of SR9003, and 100 parts by weight of SOLSPERSE 32000 were mixed by stirring, thus giving magenta mill base MM2. Preparation of magenta mill base MM2 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM3 (containing C.I. Pigment Violet 19/C.I. Pigment Red 122 mixed crystal Pigment)

300 parts by weight of Irgazine Magenta 2012, 600 parts by weight of SR9003, and 100 parts by weight of SOLSPERSE 32000 were mixed by stirring, thus giving magenta mill base MM3. Preparation of magenta mill base MM3 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM4 (containing C.I. Pigment Violet 19)

300 parts by weight of Hostaperm RED E5B02, 600 parts by weight of SR9003, and 100 parts by weight of SOLSPERSE 32000 were mixed by stirring, thus giving magenta mill base MM4. Preparation of magenta mill base MM4 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM5 (containing C.I. Pigment Red 122)

300 parts by weight of Inkjet Magenta E02, 600 parts by weight of SR9003, and 100 parts by weight of SOLSPERSE 32000 were mixed by stirring, thus giving magenta mill base MM5. Preparation of magenta mill base MM5 was carried out by dispersing using a Motor Mill M50 disperser (Eiger Machinery, Inc.) with zirconia beads having a diameter of 0.65 mm at a peripheral speed of 9 m/s for 10 hours.

### Preparation of magenta mill base MM6 (containing C.I. Pigment Red 202)

300 parts by weight of Cinquasia Magenta RT343D, 600 parts by weight of SR9003, and 100 parts by weight of SOLSPERSE 32000 were mixed by stirring, thus giving magenta mill base MM6. Preparation of magenta mill base MM6 was carried out by dispersing using a Motor Mill M50 disperser (Eiger Machinery, Inc.) with zirconia beads having a diameter of 0.65 mm at a peripheral speed of 9 m/s for 10 hours.

### Examples 1 to 16 and Comparative Examples 1 to 7

### Method for preparing ink

Cyan inks C1 to C11, magenta inks M1 to M18, yellow inks Y1 to Y18, and black inks K1 to K11 were obtained by mixing and stirring the materials described in Table 1 to Table 6. For the addition of pigments, mill bases CM, MM1 to MM8, YM1 to YM8, and KM above were used.

**(Table 1)**

| | | | Cyan | | | | | |
|---|---|---|---|---|---|---|---|---|
| | | | C1 | C2 | C3 | C4 | C5 | C6 |
| Pigment | | Cyan mill base CM Phthalocyanine | 8.4 | 8.4 | 8.4 | 8.4 | 8.4 | 8.4 |
| Monomer | Comp. A | *N*-Vinylcaprolactam | 14.5 | - | 14.5 | 14.5 | 14.5 | 14.5 |
| | | Tetrahydrofurfuryl acrylate | - | 14.5 | - | - | - | - |
| | Comp. B | Isobornyl acrylate | 40.0 | 40.0 | 21.0 | 28.0 | 40.0 | 40.0 |
| | Other | Isodecyl acrylate | 14.0 | 14.0 | 15.0 | 14.0 | 14.0 | 14.0 |
| | | Phenoxyethyl acrylate | 2.35 | 2.35 | 20.4 | 14.4 | 2.26 | 2.32 |
| Oligomer | | CN964A85 | 4.5 | 4.5 | 4.5 | 4.5 | 4.5 | 4.5 |
| Polymerization inhibitor | | FIRSTCURE ST-1 (Al salt alone) | 0.05 | 0.05 | 0.05 | 0.05 | 0.05 | 0.05 |
| Polymerization initiator | | IRGACURE 184 | 3.5 | 3.5 | 3.5 | 3.5 | 3.5 | 3.5 |
| | | LUCIRIN TPO | 9.5 | 9.5 | 9.5 | 9.5 | 9.5 | 9.5 |
| | | FIRSTCURE ITX | 3.2 | 3.2 | 3.2 | 3.2 | 3.2 | 3.2 |
| Surfactant | | TEGORAD 2100 | - | - | - | - | 0.09 | 0.03 |
| Total | | | 100 | 100 | 100 | 100 | 100 | 100 |
| Surface tension [mN/m] | | | 31.5 | 30.1 | 33.2 | 32.3 | 29.0 | 29.7 |

**(Table 2)**

| | | | Magenta | | | | | | | | | | |
|---|---|---|---|---|---|---|---|---|---|---|---|---|---|
| | | | M1 | M2 | M3 | M4 | M5 | M6 | M7 | M8 | M9 | M10 | M11 |
| Pigment | | Magenta mill base MM1 PV19/PR202 | 16.0 | 16.0 | 16.0 | 16.0 | 16.0 | 16.0 | - | - | - | - | - |
| | | Magenta mill base MM2 PV191PR202 | - | - | - | - | - | - | 16.0 | - | - | - | - |
| | | Magenta mill base MM3 PV19/PR122 | - | - | - | - | - | - | - | 16.0 | - | - | - |
| | | Magenta mill base MM4 PV19 | - | - | - | - | - | - | - | - | 16.0 | - | - |
| | | Magenta mill base MM5 PR122 | - | - | - | - | - | - | - | - | - | 16.0 | - |
| | | Magenta mill base MM6 PR202 | - | - | - | - | - | - | - | - | - | - | 16.0 |
| Monomer | Comp. A | *N*-Vinylcaprolactam | 14.5 | - | 14.5 | 14.5 | 14.5 | 14.5 | 14.5 | 14.5 | 14.5 | 14.5 | 14.5 |
| | | Tetrahydrofurfuryl acrylate | - | 14.5 | - | - | - | - | - | - | - | - | - |
| | Comp. B | Isobornyl acrylate | 40.0 | 40.0 | 21.0 | 28.0 | 40.0 | 40.0 | 40.0 | 40.0 | 40.0 | 40.0 | 40.0 |
| | Other | Isodecyl acrylate | 12.0 | 12.0 | 12.0 | 12.0 | 12.0 | 12.0 | 12.0 | 12.0 | 12.0 | 12.0 | 12.0 |
| | | Phenoxyethyl acrylate | 1.25 | 1.25 | 20.3 | 13.3 | 1.16 | 1.22 | 1.25 | 1.25 | 1.25 | 1.25 | 1.25 |
| Oligomer | | CN964A85 | - | - | - | - | - | - | - | - | - | - | - |
| Polymerization inhibitor | | FIRSTCURE ST-1 (Al salt alone) | 0.05 | 0.05 | 0.05 | 0.05 | 0.05 | 0.05 | 0.05 | 0.05 | 0.05 | 0.05 | 0.05 |
| Polymerization initiator | | IRGACURE 184 | 4.5 | 4.5 | 4.5 | 4.5 | 4.5 | 4.5 | 4.5 | 4.5 | 4.5 | 4.5 | 4.5 |
| | | LUCIRIN TPO | 8.5 | 8.5 | 8.5 | 8.5 | 8.5 | 8.5 | 8.5 | 8.5 | 8.5 | 8.5 | 8.5 |
| | | FIRSTCURE ITX | 3.2 | 3.2 | 3.2 | 3.2 | 3.2 | 3.2 | 3.2 | 3.2 | 3.2 | 3.2 | 3.2 |
| Surfactant | | TEGORAD 2100 | - | - | - | - | 0.09 | 0.03 | - | - | - | - | - |
| Total | | | 100 | 100 | 100 | 100 | 100 | 100 | 100 | 100 | 100 | 100 | 100 |
| Surface tension [mN/m] | | | 31.4 | 30.0 | 33.1 | 32.5 | 29.2 | 29.8 | 31.3 | 31.7 | 31.8 | 31.9 | 31.4 |

**(Table 3)**

| | | | Black | | | | | |
|---|---|---|---|---|---|---|---|---|
| | | | K1 | K2 | K3 | K4 | K5 | K6 |
| Pigment | | Black mill base KM Carbon Black | 8.4 | 8.4 | 8.4 | 8.4 | 8.4 | 8.4 |
| Monomer | Comp. A | N-Vinylcaprolactam | 14.5 | - | 14.5 | 14.5 | 14.5 | 14.5 |
| | | Tetrahydrofurfuryl acrylate | - | 14.5 | - | - | - | - |
| | Comp. B | Isobornyl acrylate | 40.0 | 40.0 | 21.0 | 28.0 | 40.0 | 40.0 |
| | Other | Isodecyl acrylate | 14.0 | 14.0 | 15.0 | 14.0 | 14.0 | 14.0 |
| | | Phenoxyethyl acrylate | 2.35 | 2.35 | 20.4 | 14.4 | 2.26 | 2.32 |
| Oligomer | | CN964A85 | 4.5 | 4.5 | 4.5 | 4.5 | 4.5 | 4.5 |
| Polymerization inhibitor | | FIRSTCURE ST-1 (Al salt alone) | 0.05 | 0.05 | 0.05 | 0.05 | 0.05 | 0.05 |
| Polymerization initiator | | IRGACURE 184 | 3.5 | 3.5 | 3.5 | 3.5 | 3.5 | 3.5 |
| | | LUCIRIN TPO | 9.5 | 9.5 | 9.5 | 9.5 | 9.5 | 9.5 |
| | | FIRSTCURE ITX | 3.2 | 3.2 | 3.2 | 3.2 | 3.2 | 3.2 |
| Surfactant | | TEGORAD2100 | - | - | - | - | 0.09 | 0.03 |
| Total | | | 100 | 100 | 100 | 100 | 100 | 100 |
| Surface tension [mN/m] | | | 31.5 | 30.2 | 33.1 | 32.3 | 29.1 | 29.8 |

**(Table 4)**

| | | | Yellow | | | | | | | | | | |
|---|---|---|---|---|---|---|---|---|---|---|---|---|---|
| | | | Y1 | Y2 | Y3 | Y4 | Y5 | Y6 | Y7 | Y8 | Y9 | Y10 | Y11 |
| Pigment | | Yellow mill base YM1 PY155 | 8.0 | 8.0 | 8.0 | 8.0 | 8.0 | 8.0 | - | - | - | - | - |
| | | Yellow mill base YM2 PY180 | - | - | - | - | - | - | 8.0 | - | - | - | - |
| | | Yellow mill base YM3 PY150 | - | - | - | - | - | - | - | 7.0 | - | - | |
| | | Yellow mill base YM4 PY151 | - | - | - | - | - | - | - | - | 10.5 | - | - |
| | | Yellow mill base YM5 PY120 | - | - | - | - | - | - | - | - | - | 12.5 | - |
| | | Yellow mill base YM6 PY213 | - | - | - | - | - | - | - | - | - | - | 10.5 |
| Monomer | Comp. A | N-Vinylcaprolactam | 14.5 | - | 14.5 | 14.5 | 14.5 | 14.5 | 14.5 | 14.5 | 14.5 | 14.5 | 14.5 |
| | | Tetrahydrofurfuryl acrylate | - | 14.5 | - | - | - | - | - | - | - | - | - |
| | Comp. B | Isobornyl acrylate | 40.0 | 40.0 | 21.0 | 28.0 | 40.0 | 40.0 | 40.0 | 40.0 | 40.0 | 40.0 | 40.0 |
| | Other | Isodecyl acrylate | 13.5 | 14.0 | 15.0 | 14.0 | 14.0 | 14.0 | 13.5 | 14.0 | 12.0 | 12.0 | 12.0 |
| | | Phenoxyethyl acrylate | 3.25 | 2.75 | 20.8 | 14.8 | 2.66 | 2.76 | 3.25 | 3.75 | 2.25 | 0.25 | 2.25 |
| Oligomer | | CN964A85 | 4.5 | 4.5 | 4.5 | 4.5 | 4.5 | 4.5 | 4.5 | 4.5 | 4.5 | 4.5 | 4.5 |
| Polymerization inhibitor | | FIRSTCURE ST-1 (Al salt alone) | 0.05 | 0.05 | 0.05 | 0.05 | 0.05 | 0.05 | 0.05 | 0.05 | 0.05 | 0.05 | 0.05 |
| Polymerization initiator | | IRGACURE 184 | 4.5 | 4.5 | 4.5 | 4.5 | 4.5 | 4.5 | 4.5 | 4.5 | 4.5 | 4.5 | 4.5 |
| | | LUCIRIN TPO | 8.5 | 8.5 | 8.5 | 8.5 | 8.5 | 8.5 | 8.5 | 8.5 | 8.5 | 8.5 | 8.5 |
| | | FIRSTCURE ITX | 3.2 | 3.2 | 3.2 | 3.2 | 3.2 | 3.2 | 3.2 | 3.2 | 3.2 | 3.2 | 3.2 |
| Surfactant | | TEGORAD2100 | - | - | - | - | 0.09 | 0.03 | - | - | - | - | - |
| Total | | | 100 | 100 | 100 | 100 | 100 | 100 | 100 | 100 | 100 | 100 | 100 |
| Surface tension [mN/m] | | | 31.4 | 30.4 | 33.2 | 32.1 | 29.0 | 29.9 | 31.3 | 31.5 | 31.6 | 31.4 | 31.5 |

**(Table 5)**

| | | | Cyan | | | | | Magenta | | | | | | |
|---|---|---|---|---|---|---|---|---|---|---|---|---|---|---|
| | | | C7 | C8 | C9 | C10 | C11 | M12 | M13 | M14 | M15 | M16 | M17 | M18 |
| Pigment | | Cyan mill base CM Phthalocyanine | 8.4 | 8.4 | 8.4 | 8.4 | 8.4 | - | - | - | - | - | - | - |
| | | Magenta mill base MM1 PV19/PR202 | - | - | - | - | - | 16.0 | 16.0 | 16.0 | 16.0 | 16.0 | - | - |
| | | Magenta mill base MM7 PV32 | - | - | - | - | - | - | - | - | - | - | 16.0 | - |
| | | Magenta mill base MM8 PR179 | - | - | - | - | - | - | - | - | - | - | - | 16.0 |
| Monomer | Comp. A | N-Vinylcaprolactam | - | 14.5 | 14.5 | 10.4 | 14.5 | - | 14.5 | 14.5 | 2.75 | 14.5 | 14.5 | 14.5 |
| | Comp. B | Isobornyl acrylate | 40.0 | - | 13.0 | 65.0 | 40.0 | 40.0 | - | 13.0 | 65.0 | 40.0 | 40.0 | 40.0 |
| | Other | Isodecyl acrylate | 14.0 | 14.0 | 12.0 | - | 14.0 | 12.0 | 12.0 | 8.0 | - | 12.0 | 12.0 | 12.0 |
| | | Phenoxyethyl acrylate | 16.9 | 42.4 | 31.4 | - | 1.85 | 15.8 | 41.3 | 32.3 | - | 1.25 | 1.25 | 1.25 |
| Oligomer | | CN964A85 | 4.5 | 4.5 | 4.5 | - | 4.5 | - | - | - | - | - | - | - |
| Polymerization inhibitor | | FIRSTCURE ST-1 (Al salt alone) | 0.05 | 0.05 | 0.05 | 0.05 | 0.05 | 0.05 | 0.05 | 0.05 | 0.05 | 0.05 | 0.05 | 0.05 |
| Polymerization initiator | | IRGACURE 184 | 3.5 | 3.5 | 3.5 | 3.5 | 3.5 | 4.5 | 4.5 | 4.5 | 4.5 | 4.5 | 4.5 | 4.5 |
| | | LUCIRIN TPO | 9.5 | 9.5 | 9.5 | 9.5 | 9.5 | 8.5 | 8.5 | 8.5 | 8.5 | 8.5 | 8.5 | 8.5 |
| | | FIRSTCURE ITX | 3.2 | 3.2 | 3.2 | 3.2 | 3.2 | 3.2 | 3.2 | 3.2 | 3.2 | 3.2 | 3.2 | 3.2 |
| Surfactant | | TEGORAD 2100 | - | - | - | - | 0.5 | - | - | - | - | 0.5 | - | - |
| Total | | | 100 | 100 | 100 | 100 | 100 | 100 | 100 | 100 | 100 | 100 | 100 | 100 |
| Surface tension [mN/m] | | | 29.2 | 37.5 | 34.8 | 30.0 | 26.5 | 29.5 | 37.4 | 34.9 | 30.8 | 26.7 | 31.4 | 31.5 |

**(Table 6)**

| | | | Yellow | | | | | | | Black | | | | |
|---|---|---|---|---|---|---|---|---|---|---|---|---|---|---|
| | | | Y12 | Y13 | Y14 | Y15 | Y16 | Y17 | Y18 | K7 | K8 | K9 | K10 | K11 |
| Pigment | | Yellow mill base YM1 PY155 | 8.0 | 8.0 | 8.0 | 8.0 | 8.0 | - | - | - | - | - | - | - |
| | | Yellow mill base YM7 PY128 | - | - | - | - | - | 12.5 | - | - | - | - | - | - |
| | | Yellow mill base YM8 PY154 | - | - | - | - | - | - | 12.5 | - | - | - | - | - |
| | | Black mill base KM Carbon Black | - | - | - | - | - | - | - | 8.4 | 8.4 | 8.4 | 8.4 | 8.4 |
| Monomer | Comp. A | N-Vinylcaprolactam | - | 14.5 | 14.5 | 10.8 | 14.5 | 14.5 | 14.5 | - | 14.5 | 14.5 | 10.4 | 14.5 |
| | Comp. B | Isobornyl acrylate | 40.0 | - | 13.0 | 65.0 | 40.0 | 40.0 | 40.0 | 40.0 | - | 13.0 | 65.0 | 40.0 |
| | Other | Isodecyl acrylate | 13.5 | 13.5 | 7.0 | - | 13.5 | 12.0 | 12.0 | 12.0 | 13.5 | 12.0 | - | 14.0 |
| | | Phenoxyethyl acrylate | 17.8 | 43.3 | 36.8 | - | 2.75 | 0.25 | 0.25 | 18.9 | 42.9 | 31.4 | - | 1.85 |
| Oligomer | | CN964A85 | 4.5 | 4.5 | 4.5 | - | 4.5 | 4.5 | 4.5 | 4.5 | 4.5 | 4.5 | - | 4.5 |
| Polymerization inhibitor | | FIRSTCURE ST-1 (Al salt alone) | 0.05 | 0.05 | 0.05 | 0.05 | 0.05 | 0.05 | 0.05 | 0.05 | 0.05 | 0.05 | 0.05 | 0.05 |
| Polymerization initiator | | IRGACURE 184 | 4.5 | 4.5 | 4.5 | 4.5 | 4.5 | 4.5 | 4.5 | 4.5 | 4.5 | 4.5 | 4.5 | 3.5 |
| | | LUCIRIN TPO | 8.5 | 8.5 | 8.5 | 8.5 | 8.5 | 8.5 | 8.5 | 8.5 | 8.5 | 8.5 | 8.5 | 9.5 |
| | | FIRSTCURE ITX | 3.2 | 3.2 | 3.2 | 3.2 | 3.2 | 3.2 | 3.2 | 3.2 | 3.2 | 3.2 | 3.2 | 3.2 |
| Surfactant | | TEGORAD 2100 | - | - | - | - | 0.5 | - | - | - | - | - | - | 0.5 |
| Total | | | 100 | 100 | 100 | 100 | 100 | 100 | 100 | 100 | 100 | 100 | 100 | 100 |
| Surface tension [mN/m] | | | 29.4 | 37.4 | 35.0 | 30.2 | 26.3 | 31.6 | 31.2 | 29.3 | 37.9 | 34.8 | 30.7 | 26.1 |

The units for the numerical values of components used in Table 1 to Table 6 are parts by weight.

Details of the abbreviations in Table 1 to Table 6 are as follows.
PV19/PR202: C.I. Pigment Violet 19/C.I. Pigment Red 202 mixed crystal pigment
PV19/PR122: C.I. Pigment Violet 19/C.I. Pigment Red 122 mixed crystal pigment
PV19: C.I. Pigment Violet 19 pigment
PR122: C.I. Pigment Red 122 pigment
PR202: C.I. Pigment Red 202 pigment
PV32: C.I. Pigment Violet 32 pigment
PR179: C.I. Pigment Red 179 pigment
PY155: C.I. Pigment Yellow 155 pigment
PY180: C.I. Pigment Yellow 180 pigment
PY150: C.I. Pigment Yellow 150 pigment
PY151: C.I. Pigment Yellow 151 pigment
PY120: C.I. Pigment Yellow 120 pigment
PY213: C.I. Pigment Yellow 213 pigment
PY128: C.I. Pigment Yellow 128 pigment
PY154: C.I. Pigment Yellow 154 pigment

An ink set was prepared by combining the inks obtained, and the inkjet recording method described below and various types of evaluation were carried out. The evaluation results are given in Table 7 to Table 9 below.

### Inkjet recording method

An inkjet image was printed using an Acuity Advance UV curing type inkjet printer (FUJIFILM Corporation).

A total of 8 types of printed images were prepared on coated paper (Oji Paper Co., Ltd.) at a resolution of 600 x 450 dpi with a size of 10 cm x 10 cm; cyan 100% solid image (C), magenta 100% solid image (M), yellow 100% solid image (Y), single color black 100% solid image (K), blue image (cyan 100% solid image + magenta 100% solid image) (B), red image (yellow 100% solid image + magenta 100% solid image) (R), green image (cyan 100% solid image + yellow 100% solid image) (G), 4 color black (cyan 100% solid image + yellow 100% solid image + magenta 100% solid image + single color black 100% solid image) (4K). A lamp was equipped with a SUB ZERO 085 H bulb lamp unit manufactured by Integration Technology, and front and rear lamp intensity was set at level 4.

During printing, when the exposure area illumination intensity was measured, it was found to be 740 mW/cm².

### Evaluation of color saturation

Hue measurement (D65 light source, viewing angle 2°) was carried out by means of a SpectroEye (Gretag) using an image obtained by the above-mentioned inkjet recording method. As an index for relative comparison of color saturation, the ((a*)² + (b*)²)^{1/2} value was calculated. The larger the value, the higher the color saturation. The evaluation results are shown in Table 8.

### Evaluation of image reflection color density

Reflection color density measurement (D65 light source, viewing angle 2°) was carried out by means of a SpectroEye (Gretag) using an image obtained by the above-mentioned inkjet recording method. The evaluation results are shown in Table 8.

### Evaluation of surface gloss

Measurement was carried out for an image obtained by the above-mentioned inkjet recording method using a surface gloss meter manufactured by Sheen Instruments Ltd. at a measurement angle of 60°. The evaluation criteria were as follows. The evaluation results are shown in Table 9.
6: a surface gloss of at least 60
5: a surface gloss of at least 50 but less than 60
4: a surface gloss of at least 40 but less than 50
3: a surface gloss of at least 30 but less than 40
2: a surface gloss of at least 20 but less than 30
1: a surface gloss of less than 20

### Evaluation of image stripe unevenness

The stripe unevenness of an image obtained by the above-mentioned inkjet recording method was evaluated visually from a position 2 m away from the image. The evaluation criteria were as follows. The evaluation results are shown in Table 9.
3: stripe unevenness could not be clearly seen by eye.
2: slight stripe unevenness could be seen by eye.
1: stripe unevenness could be clearly seen by eye.

### Evaluation of curability

The degree of tackiness of an image obtained by the above-mentioned inkjet recording method was evaluated by touch using the criteria below. The evaluation results are shown in Table 9.
3: there was no tackiness on the image.
2: the image was slightly tacky, but uncured ink or cured film did not transfer to the hand.
1: the image was tacky, and some uncured ink or cured film transferred to the hand.

### Method for evaluation of flexibility: bending test

In the present embodiment, as a method for evaluating the flexibility of a cured film, a bending test was carried out. 100% and 200% solid images were formed by the above-mentioned inkjet recording method and evaluation was carried out using the criteria below. The evaluation results are shown in Table 9.
3: no cracks occurred for 100% and 200% samples.
2: no cracks occurred for the 100% sample, but cracks occurred in the bent part of an image area for the 200% average film thickness sample.
1: cracks occurred in the bent part of an image area for both 100% and 200% average film thickness samples.

**(Table 7)**

| | Ink combination | | | | Ink composition | | | | | | Amt. of surfactant [wt%] |
|---|---|---|---|---|---|---|---|---|---|---|---|
| | | | | | Pigment type | | | | Monomer | | |
| | C | M | Y | K | C | M | Y | K | Comp. A | Comp. B | |
| Ex. 1 | C1 | M1 | Y1 | K1 | Phthalocyanine | PV19/PR202 | PY155 | Carbon black | NVC 14.5 wt% | IBOA 40 wt% | 0 |
| Ex. 2 | C2 | M2 | Y2 | K2 | Phthalocyanine | PV19/PR202 | PY155 | Carbon black | THFA 14.5 wt% | IBOA 40 wt% | 0 |
| Ex. 3 | C3 | M3 | Y3 | K3 | Phthalocyanine | PV19/PR202 | PY155 | Carbon black | NVC 14.5 wt% | IBOA 21 wt% | 0 |
| Ex. 4 | C4 | M4 | Y4 | K4 | Phthalocyanine | PV19/PR202 | PY155 | Carbon black | NVC 14.5 wt% | IBOA 28 wt% | 0 |
| Ex. 5 | C7 | M7 | Y7 | K7 | Phthalocyanine | PV19/PR202 | PY155 | Carbon black | NVC 14.5 wt% | IBOA 40 wt% | 0.09 |
| Ex. 6 | C8 | M8 | Y8 | K8 | Phthalocyanine | PV19/PR202 | PY155 | Carbon black | NVC 14.5 wt% | IBOA 40 wt% | 0.03 |
| Ex. 7 | C1 | M9 | Y1 | K1 | Phthalocyanine | PV19/PR202 | PY155 | Carbon black | NVC 14.5 wt% | IBOA 40 wt% | 0 |
| Ex. 8 | C1 | M10 | Y1 | K1 | Phthalocyanine | PV19/PR122 | PY155 | Carbon black | NVC 14.5 wt% | IBOA 40 wt% | 0 |
| Ex. 9 | C1 | M11 | Y1 | K1 | Phthalocyanine | PV19 | PY155 | Carbon black | NVC 14.5 wt% | IBOA 40 wt% | 0 |
| Ex. 10 | C1 | M12 | Y1 | K1 | Phthalocyanine | PR122 | PY155 | Carbon black | NVC 14.5 wt% | IBOA 40 wt% | 0 |
| Ex. 11 | C1 | M13 | Y1 | K1 | Phthalocyanine | PR202 | PY155 | Carbon black | NVC 14.5 wt% | IBOA 40 wt% | 0 |
| Ex. 12 | C1 | M1 | Y9 | K1 | Phthalocyanine | PV19/PR202 | PY180 | Carbon black | NVC 14.5 wt% | IBOA 40 wt% | 0 |
| Ex. 13 | C1 | M1 | Y10 | K1 | Phthalocyanine | PV19/PR202 | PY150 | Carbon black | NVC 14.5 wt% | IBOA 40 wt% | 0 |
| Ex. 14 | C1 | M1 | Y11 | K1 | Phthalocyanine | PV19/PR202 | PY151 | Carbon black | NVC 14.5 wt% | IBOA 40 wt% | 0 |
| Ex. 15 | C1 | M1 | Y12 | K1 | Phthalocyanine | PV19/PR202 | PY120 | Carbon black | NVC 14.5 wt% | IBOA 40 wt% | 0 |
| Ex. 16 | C1 | M1 | Y13 | K1 | Phthalocyanine | PV19/PR202 | PY213 | Carbon black | NVC 14.5 wt% | IBOA 40 wt% | 0 |
| Comp. Ex. 1 | C9 | M14 | Y14 | K9 | Phthalocyanine | PV9/PR202 | PY155 | Carbon black | NVC 14.5 wt% | IBOA 40 wt% | 0 |
| Comp. Ex. 2 | C10 | M15 | Y15 | K10 | Phthalocyanine | PV19/PR202 | PY155 | Carbon black | NVC 14.5 wt% | - | 0 |
| Comp. Ex. 3 | C11 | M16 | Y16 | K11 | Phthalocyanine | PV19/PR202 | PY155 | Carbon black | NVC 14.5 wt% | IBOA 13 wt% | 0 |
| Comp. Ex. 4 | C12 | M17 | Y17 | K12 | Phthalocyanine | PV19/PR202 | PY155 | Carbon black | NVC 2.8-10.8 wt% | IBOA 65 wt% | 0 |
| Comp. Ex. 5 | C13 | M18 | Y18 | K13 | Phthalocyanine | PV19/PR202 | PY155 | Carbon black | NVC 14.5 wt% | IBOA 40 wt% | 0.5 |
| Comp. Ex. 6 | C1 | M19 | Y19 | K1 | Phthalocyanine | PV32 | PY128 | Carbon black | NVC 14.5 wt% | IBOA 40 wt% | 0 |
| Comp. Ex. 7 | C1 | M20 | Y20 | K1 | Phthalocyanine | PR179 | PY154 | Carbon black | NVC 14.5 wt% | IBOA 40 wt% | 0 |

**(Table 8)**

| | Color saturation | | | | | | Reflection color density | | | | | | | |
|---|---|---|---|---|---|---|---|---|---|---|---|---|---|---|
| | C | M | Y | R | G | B | C | M | Y | K | R | G | B | 4K |
| Ex. 1 | 57 | 81 | 108 | 85 | 82 | 73 | 2.18 | 1.94 | 1.83 | 2.01 | 1.91 | 1.97 | 2.10 | 2.10 |
| Ex. 2 | 56 | 81 | 105 | 80 | 81 | 72 | 2.14 | 1.92 | 1.82 | 1.92 | 1.87 | 1.95 | 2.02 | 1.98 |
| Ex. 3 | 54 | 77 | 99 | 78 | 76 | 70 | 2.05 | 1.90 | 1.71 | 1.84 | 1.81 | 1.94 | 1.98 | 1.94 |
| Ex. 4 | 55 | 79 | 100 | 80 | 77 | 71 | 2.09 | 1.92 | 1.75 | 1.96 | 1.82 | 1.93 | 2.02 | 2.00 |
| Ex. 5 | 54 | 77 | 97 | 84 | 76 | 69 | 1.95 | 1.84 | 1.56 | 1.80 | 1.74 | 1.81 | 1.88 | 1.89 |
| Ex. 6 | 54 | 78 | 99 | 85 | 76 | 69 | 2.01 | 1.90 | 1.61 | 1.83 | 1.79 | 1.91 | 1.98 | 1.95 |
| Ex. 7 | 57 | 85 | 108 | 85 | 81 | 75 | 2.17 | 2.00 | 1.83 | 2.01 | 1.90 | 1.95 | 2.14 | 2.05 |
| Ex. 8 | 57 | 79 | 108 | 85 | 82 | 71 | 2.16 | 1.91 | 1.82 | 2.00 | 1.87 | 1.97 | 2.00 | 1.97 |
| Ex. 9 | 57 | 78 | 108 | 84 | 82 | 67 | 2.18 | 1.84 | 1.83 | 2.00 | 1.85 | 1.97 | 1.92 | 2.00 |
| Ex. 10 | 57 | 79 | 108 | 85 | 82 | 71 | 2.16 | 1.95 | 1.83 | 1.98 | 1.95 | 1.96 | 2.05 | 1.99 |
| Ex. 11 | 57 | 79 | 108 | 84 | 82 | 70 | 2.17 | 1.96 | 1.84 | 2.00 | 1.97 | 1.97 | 2.06 | 2.00 |
| Ex. 12 | 57 | 81 | 108 | 83 | 82 | 73 | 2.18 | 1.94 | 1.85 | 2.01 | 1.95 | 1.99 | 2.09 | 2.00 |
| Ex. 13 | 56 | 80 | 109 | 84 | 83 | 73 | 2.18 | 1.96 | 1.87 | 2.01 | 1.96 | 1.99 | 20.80 | 1.90 |
| Ex. 14 | 57 | 81 | 99 | 79 | 81 | 72 | 2.18 | 1.94 | 1.74 | 1.99 | 1.79 | 1.89 | 2.09 | 2.04 |
| Ex. 15 | 56 | 80 | 101 | 80 | 79 | 73 | 2.18 | 1.94 | 1.70 | 2.00 | 1.83 | 1.94 | 2.09 | 2.02 |
| Ex. 16 | 57 | 81 | 102 | 82 | 80 | 73 | 2.18 | 1.95 | 1.76 | 2.01 | 1.85 | 1.96 | 2.09 | 2.04 |
| Comp. Ex. 1 | 53 | 74 | 90 | 76 | 75 | 69 | 1.74 | 1.83 | 1.47 | 1.36 | 1.49 | 1.79 | 1.86 | 1.49 |
| Comp. Ex. 2 | 52 | 70 | 89 | 75 | 76 | 70 | 1.65 | 1.75 | 1.46 | 1.74 | 1.51 | 1.74 | 1.82 | 1.51 |
| Comp. Ex. 3 | 53 | 72 | 91 | 76 | 78 | 71 | 1.70 | 1.78 | 1.52 | 1.75 | 1.54 | 1.78 | 1.83 | 1.61 |
| Comp. Ex. 4 | 56 | 79 | 102 | 81 | 81 | 72 | 2.26 | 1.95 | 1.82 | 2.00 | 1.88 | 1.95 | 2.07 | 2.03 |
| Comp. Ex. 5 | 50 | 65 | 85 | 74 | 74 | 61 | 1.45 | 1.52 | 1.42 | 1.65 | 1.42 | 1.56 | 1.61 | 1.42 |
| Comp. Ex. 6 | 57 | 65 | 85 | 70 | 75 | 62 | 2.18 | 1.75 | 1.52 | 2.01 | 1.52 | 1.79 | 1.80 | 1.88 |
| Comp. Ex. 7 | 57 | 73 | 88 | 76 | 75 | 64 | 2.18 | 1.77 | 1.54 | 2.01 | 1.60 | 1.80 | 1.82 | 1.88 |

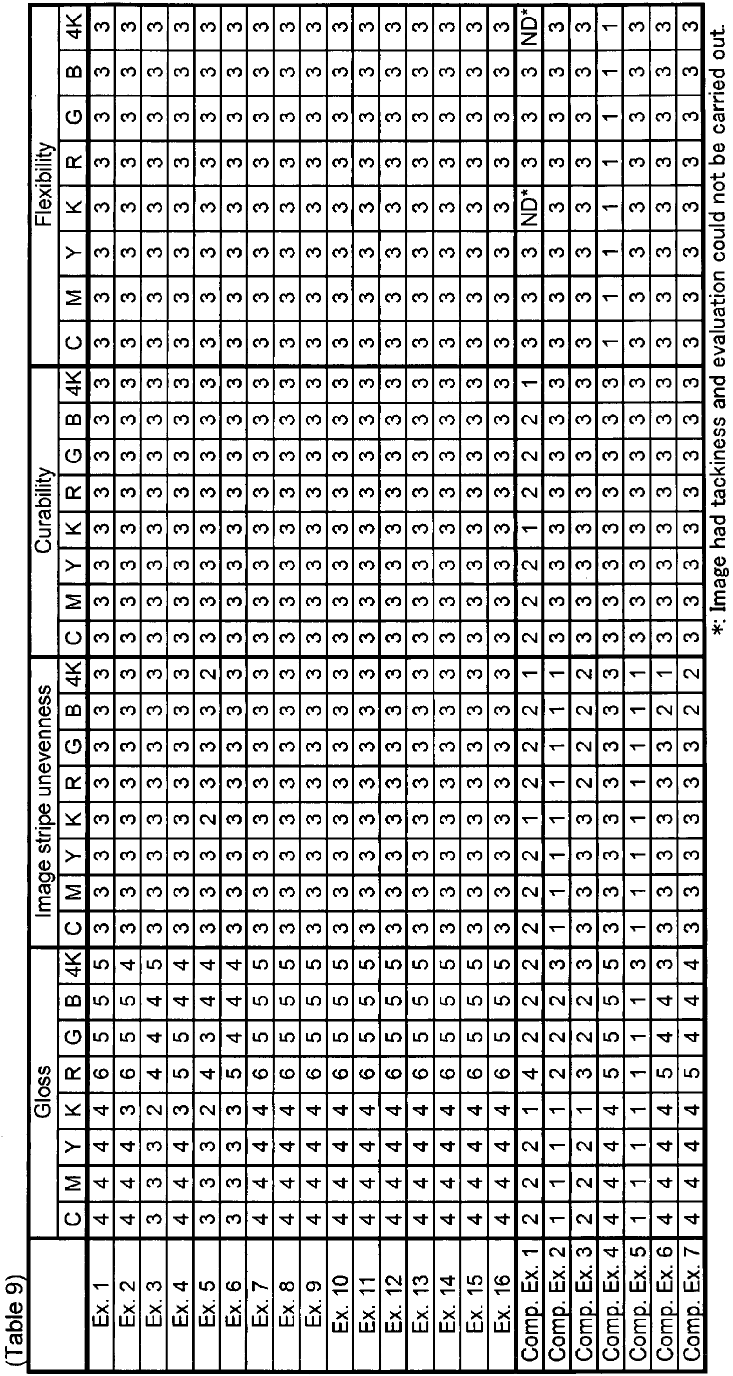

The abbreviations in the column for pigment type in Table 7 are the same as the abbreviations for Table 1 to Table 6 above.

Furthermore, the abbreviations in the column for monomer in Table 7 are as follows.
NVC: N-vinylcaprolactam
THFA: tetrahydrofurfuryl acrylate
IBOA: isobornyl acrylate

## Claims

1. An ink set for inkjet recording, comprising at least a cyan ink, a magenta ink, a yellow ink, and a black ink,
the cyan ink comprising at least a phthalocyanine pigment,
the magenta ink comprising at least C.I. Pigment Violet 19, C.I. Pigment Red 122, C.I. Pigment Red 202, or a mixed crystal pigment containing C.I. Pigment Violet 19,
the yellow ink comprising at least C.I. Pigment Yellow 120, 150, 151, 155, 180, or 213,
the black ink comprising at least carbon black,
all of the cyan ink, the magenta ink, the yellow ink, and the black ink comprising
(Component A) an N-vinyllactam and/or tetrahydrofurfuryl (meth)acrylate, (Component B) a compound represented by Formula (1) at 21 to 55 wt% relative to the total weight of the ink,
(Component C) a polymerization initiator, and
(Component E) phenoxyethyl (meth)acrylate,
all of the cyan ink, the magenta ink, the yellow ink, and the black ink either not comprising a silicone-based surfactant or a fluorine-based surfactant or comprising a silicone-based surfactant and a fluorine-based surfactant at a total content of greater than 0 wt% but less than 0.1 wt% relative to the total weight of the ink, and
all of the cyan ink, the magenta ink, the yellow ink, and the black ink having a
surface tension at 25°C of 29.0 to 33.4 mN/m, 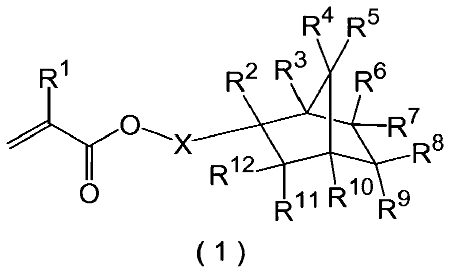 wherein in the Formula, R¹ denotes a hydrogen atom or a methyl group, X denotes a single bond or a divalent linking group, and R² to R¹² independently denote a hydrogen atom or an alkyl group.

2. The ink set for inkjet recording according to Claim 1, wherein Component A has a content of 5 to 35 wt% relative to the total weight of the ink.

3. The ink set for inkjet recording according to Claim 1 or 2, wherein Component B is isobornyl (meth)acrylate.

4. The ink set for inkjet recording according to any one of Claims 1 to 3, wherein all of the cyan ink, the magenta ink, the yellow ink, and the black ink comprise a (meth)acrylate compound containing a chain-form hydrocarbon group having 8 to 13 carbons.

5. The ink set for inkjet recording according to any one of Claims 1 to 4, wherein all of the cyan ink, the magenta ink, the yellow ink, and the black ink comprise, as Component C, an α-hydroxyketone compound and an acylphosphine compound.

6. The ink set for inkjet recording according to any one of Claims 1 to 5, wherein all of the cyan ink, the magenta ink, the yellow ink, and the black ink comprise a thioxanthone.

7. The ink set for inkjet recording according to any one of Claims 1 to 6, wherein all of the cyan ink, the magenta ink, the yellow ink, and the black ink comprise a polyfunctional polymerizable compound at a content of 1 to 20 wt% relative to the total weight of the ink.

8. The ink set for inkjet recording according to any one of Claims 1 to 7, wherein the magenta ink comprises at least a mixed crystal pigment containing C.I. Pigment Violet 19.

9. The ink set for inkjet recording according to any one of Claims 1 to 8, wherein the yellow ink comprises C.I. Pigment Yellow 150, 155, or 180.

10. The ink set for inkjet recording according to Claim 9, wherein the yellow ink comprises C.I. Pigment Yellow 155 or 180.

11. The ink set for inkjet recording according to any one of Claims 1 to 10, wherein the content of Component E in the inks of each color is 1 to 30 wt% relative to the total weight of the ink.

12. The ink set for inkjet recording according to any one of Claims 1 to 11, wherein the inks of each color are solvent-free.

13. An inkjet recording method comprising:
(a¹) a step of discharging onto a recording medium at least each of the cyan ink, the magenta ink, the yellow ink and the black ink of the ink set for inkjet recording according to any one of Claims 1 to 12; and
(b¹) a step of curing the ink by irradiating the discharged ink with actinic radiation.

14. The inkjet recording method according to Claim 13, wherein the inkjet recording method comprises carrying out drawing with multiple, that is, 2 to 16 passes for the same area.

15. A printed material formed using the inkjet recording method according to Claim 13 or 14.

## Patentansprüche

1. Tintensatz zur Tintenstrahlaufzeichnung, aufweisend mindestens eine cyanfarbene Tinte, eine magentafarbene Tinte, eine gelbe Tinte und eine schwarze Tinte,
wobei die cyanfarbene Tinte mindestens ein Phtalocyaninpigment aufweist,
die magentafarbene Tinte mindestens C.I. Pigment Violet 19, C.I. Pigment Red 122, C.I. Pigment Red 202 oder ein gemischtes Kristallpigment das C.I. Pigment Violet 19 enthält, aufweist,
die gelbe Tinte mindestens C.I. Pigment Yellow 120, 150, 151, 155, 180 oder 213 aufweist,
die schwarze Tine mindestens Kohlenschwarz aufweist,
alle von der cyanfarbenen Tinte, der magentafarbenen Tinte, der gelben Tinte und der schwarzen Tinte
(Komponente A) ein N-Vinyllactam und/oder Tetrahydrofurfuryl(meth)acrylat,
(Komponente B) eine Verbindung, dargestellt durch Formel (1) bei 21 bis 55 Gew% relativ zum Gesamtgewicht der Tinte,
(Komponente C) einen Polymerisationsinitiator und (Komponente E) Phenoxyethyl(meth)acrylat aufweisen, wobei alle von der cyanfarbenen Tinte, der magentafarbenen Tinte, der gelben Tinte und der schwarzen Tinte entweder keine oberflächenaktive Substanz auf Silikonbasis noch eine oberflächenaktive Substanz auf Fluorbasis aufweisen oder eine oberflächenaktive Substanz auf Silikonbasis und eine oberflächenaktive Substanz auf Fluorbasis mit einem Gesamtgehalt von mehr als 0 Gew% aber weniger als 0,1 Gew% relativ zum Gesamtgewicht der Tinte aufweisen und
alle von der cyanfarbenen Tinte, der magentafarbenen Tinte, der gelben Tinte und der schwarzen Tinte eine Oberflächenspannung bei 25°C von 29,0 bis 33,4 mN/m haben, 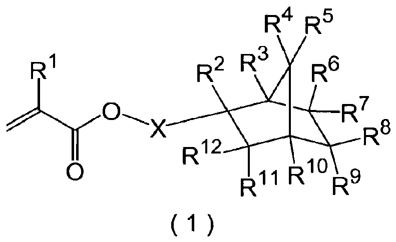 wobei in der Formel R¹ ein Wasserstoffatom oder eine Methylgruppe bezeichnet, X eine Einzelbindung oder eine divalente Bindungsgruppe bezeichnet und R² bis R¹² unabhängig ein Wasserstoffatom oder eine Alkylgruppe bezeichnen.

2. Tintensatz zur Tintenstrahlaufzeichnung nach Anspruch 1, wobei Komponente A einen Gehalt von 5 bis 35 Gew% relativ zum Gesamtgewicht der Tinte hat.

3. Tintensatz zur Tintenstrahlaufzeichnung nach Anspruch 1 oder 2, wobei Komponente B Isobornyl(meth)acrylat ist.

4. Tintensatz zur Tintenstrahlaufzeichnung nach einem der Ansprüche 1 bis 3, wobei alle von der cyanfarbenen Tinte, der magentafarbenen Tinte, der gelben Tinte und der schwarzen Tinte eine (Meth)acrylatverbindung aufweisen, die eine Kettenform-Kohlenwasserstoffgruppe mit 8 bis 13 Kohlenstoffen enthält.

5. Tintensatz zur Tintenstrahlaufzeichnung nach einem der Ansprüche 1 bis 4, wobei alle von der cyanfarbenen Tinte, der magentafarbenen Tinte, der gelben Tinte und der schwarzen Tinte als Komponente C eine α-Hydroxyketonverbindung und eine Acylphosphinverbindung aufweisen.

6. Tintensatz zur Tintenstrahlaufzeichnung nach einem der Ansprüche 1 bis 5, wobei alle von der cyanfarbenen Tinte, der magentafarbenen Tinte, der gelben Tinte und der schwarzen Tinte ein Thioxanthon aufweisen.

7. Tintensatz zur Tintenstrahlaufzeichnung nach einem der Ansprüche 1 bis 6, wobei alle von der cyanfarbenen Tinte, der magentafarbenen Tinte, der gelben Tinte und der schwarzen Tinte eine polyfunktionelle polymerisierbare Verbindung mit einem Gehalt von 1 bis 20 Gew% relativ zum Gesamtgewicht der Tinte aufweisen.

8. Tintensatz zur Tintenstrahlaufzeichnung nach einem der Ansprüche 1 bis 7, wobei die magentafarbene Tinte mindestens ein gemischtes Kristallpigment aufweist, das C.I. Pigment Violet 19 enthält.

9. Tintensatz zur Tintenstrahlaufzeichnung nach einem der Ansprüche 1 bis 8, wobei die gelbe Tinte C.I. Pigment Yellow 150, 155 oder 180 aufweist.

10. Tintensatz zur Tintenstrahlaufzeichnung nach Anspruch 9, wobei die gelbe Tinte C.I. Pigment Yellow 155 oder 180 aufweist.

11. Tintensatz zur Tintenstrahlaufzeichnung nach einem der Ansprüche 1 bis 10, wobei der Gehalt von Komponente E in den Tinten jeder Farbe 1 bis 30 Gew% relativ zum Gesamtgewicht der Tinte ist.

12. Tintensatz zur Tintenstrahlaufzeichnung nach einem der Ansprüche 1 bis 11, wobei die Tinten für jede Farbe lösemittelfrei sind.

13. Tintenstrahlaufzeichnungsverfahren, aufweisend:
(a¹) einen Schritt zum Abgeben auf ein Aufzeichnungsmedium mindestens jeder der cyanfarbenen Tinte, der magentafarbenen Tinte, der gelben Tinte und der schwarzen Tinte des Tintensatzes zur Tintenstrahlaufzeichnung nach einem der Ansprüche 1 bis 12; und
(b¹) einen Schritt zum Härten der Tinte durch Bestrahlen der abgegebenen Tinte mit aktinischer Strahlung.

14. Tintenstrahlaufzeichnungsverfahren nach Anspruch 13, wobei das Tintenstrahlaufzeichnungsverfahren das Ausführen einer Zeichnung mit mehreren, das heißt, 2 bis 16 Durchgängen für dieselbe Fläche aufweist.

15. Druckmaterial, das unter Verwendung des Tintenstrahlaufzeichnungsverfahrens nach Anspruch 13 oder 14 gebildet wird.

## Revendications

1. Jeu d'encres pour enregistrement par jet d'encre, comprenant au moins une encre cyan, une encre magenta, une encre jaune, et une encre noire,
l'encre cyan comprenant au moins un pigment phtalocyanine,
l'encre magenta comprenant au moins le pigment violet C.I. 19, le pigment rouge C.I. 122, le pigment rouge C.I. 202, ou un pigment cristallin mixte contenant le pigment violet C.I. 19,
l'encre jaune comprenant au moins le pigment jaune C.I. 120, 150, 151, 155, 180, ou 213,
l'encre noire comprenant au moins du noir de carbone, l'encre cyan, l'encre magenta, l'encre jaune, et l'encre noire comprenant toutes
(composant A) un N-vinyllactame et/ou du (méth)acrylate de tétrahydrofurfuryle,
(composant B) un composé représenté par la formule (1) à 21 à 55 % en poids par rapport au poids total de l'encre,
(composant C) un initiateur de polymérisation, et (composant E) du (méth)acrylate de phénoxyéthyle, l'encre cyan, l'encre magenta, l'encre jaune, et l'encre noire ne comprenant aucune un tensioactif à base de silicone ou un tensioactif à base de fluor ou comprenant toutes un tensioactif à base de silicone et un tensioactif à base de fluor à une teneur totale supérieure à 0 %, mais inférieure à 0,1 % en poids par rapport au poids total de l'encre, et
l'encre cyan, l'encre magenta, l'encre jaune, et l'encre noire ayant toutes une tension superficielle à 25 °C de 29,0 à 33,4 mN/m, 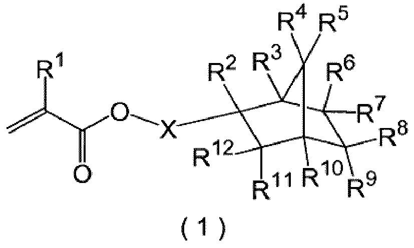 dans lequel, dans la formule, R¹ représente un atome d'hydrogène ou un groupe méthyle, X représente une simple liaison ou un groupe de liaison divalent, et R² à R¹² représentent indépendamment un atome d'hydrogène ou un groupe alkyle.

2. Jeu d'encres pour enregistrement par jet d'encre selon la revendication 1, dans lequel le composant A a une teneur de 5 à 35 % en poids par rapport au poids total de l'encre.

3. Jeu d'encres pour enregistrement par jet d'encre selon la revendication 1 ou 2, dans lequel le composant B est le (méth)acrylate d'isobornyle.

4. Jeu d'encres pour enregistrement par jet d'encre selon l'une quelconque des revendications 1 à 3, dans lequel l'encre cyan, l'encre magenta, l'encre jaune, et l'encre noire comprennent toutes un composé (méth)acrylate contenant un groupe hydrocarboné sous forme de chaîne ayant 8 à 13 carbones.

5. Jeu d'encres pour enregistrement par jet d'encre selon l'une quelconque des revendications 1 à 4, dans lequel l'encre cyan, l'encre magenta, l'encre jaune, et l'encre noire comprennent toutes, comme composant C, un composé α-hydroxycétone et un composé acylphosphine.

6. Jeu d'encres pour enregistrement par jet d'encre selon l'une quelconque des revendications 1 à 5, dans lequel l'encre cyan, l'encre magenta, l'encre jaune, et l'encre noire comprennent toutes une thioxanthone.

7. Jeu d'encres pour enregistrement par jet d'encre selon l'une quelconque des revendications 1 à 6, dans lequel l'encre cyan, l'encre magenta, l'encre jaune, et l'encre noire comprennent toutes un composé polyfonctionnel polymérisable à une teneur de 1 à 20 % en poids par rapport au poids total de l'encre.

8. Jeu d'encres pour enregistrement par jet d'encre selon l'une quelconque des revendications 1 à 7, dans lequel l'encre magenta comprend au moins un pigment cristallin mixte contenant le pigment violet C.I. 19.

9. Jeu d'encres pour enregistrement par jet d'encre selon l'une quelconque des revendications 1 à 8, dans lequel l'encre jaune comprend le pigment jaune C.I. 150, 155, ou 180.

10. Jeu d'encres pour enregistrement par jet d'encre selon la revendication 9, dans lequel l'encre jaune comprend le pigment jaune C.I. 155 ou 180.

11. Jeu d'encres pour enregistrement par jet d'encre selon l'une quelconque des revendications 1 à 10, dans lequel la teneur du composant E dans les encres de chaque couleur est de 1 à 30 % en poids par rapport au poids total de l'encre.

12. Jeu d'encres pour enregistrement par jet d'encre selon l'une quelconque des revendications 1 à 11, dans lequel les encres de chaque couleur sont exemptes de solvant.

13. Procédé d'enregistrement par jet d'encre comprenant :
(a¹) une étape de décharge sur un support d'enregistrement d'au moins chacune de l'encre cyan, l'encre magenta, l'encre jaune et l'encre noire du jeu d'encres pour enregistrement par jet d'encre selon l'une quelconque des revendications 1 à 12 ; et
(b¹) une étape de durcissement de l'encre par irradiation de l'encre déchargée avec un rayonnement actinique.

14. Procédé d'enregistrement par jet d'encre selon la revendication 13, le procédé d'enregistrement par jet d'encre comprenant la réalisation d'un dessin avec de multiples, c'est-à-dire 2 à 16 passes pour la même zone.

15. Matériau imprimé formé en utilisant le procédé d'enregistrement par jet d'encre selon la revendication 13 ou 14.
